# EUROPÄISCHE PATENTSCHRIFT

(11) **EP 2 821 572 B1**
(45) Veröffentlichungstag und Bekanntmachung des Hinweises auf die Patenterteilung: **30.08.2017**
(21) Anmeldenummer: 14174392.2
(22) Anmeldetag: 26.06.2014
(51) Int. Cl.: E05B 81/22, E05B 83/40, E05B 77/38, E05B 81/34, E05B 81/40, E05B 83/44

(54) **Zuzieheinheit für eine Kraftfahrzeugtür**
Assisted final closing unit for a motor vehicle door
Unité de fermeture assistée pour une porte de véhicule automobile

(30) Priorität: 01.07.2013 DE 102013106884
(43) Veröffentlichungstag der Anmeldung: 07.01.2015
(73) Patentinhaber: Müller, Peter, 88630 Pfullendorf (DE); Entech Engineering Technologies Schuler GmbH, 88212 Ravensburg (DE)
(72) Erfinder: Bencina, Daniel, 88339 Bad Waldsee (DE)
(74) Vertreter: Daub, Thomas

(56) Entgegenhaltungen:
- WO-A1-2004/085775
- WO-A1-2012/028120
- DE-A1- 10 327 973
- DE-U1-202008 007 296

## Beschreibung

### Stand der Technik

Die Erfindung betrifft eine Zuzieheinheit nach dem Oberbegriff des Anspruchs 1, ein Kraftfahrzeug nach dem Anspruch 14 und eine Verwendung einer Zuzieheinheit nach dem Anspruch 18.

Aus der WO 2004/085775 A1 ist bereits eine Zuzieheinheit für eine Kraftfahrzeugtür mit einem translatorisch beweglich angeordneten Schließelement, das dazu vorgesehen ist, mit einer Schlosseinheit der Kraftfahrzeugtür zusammenzuwirken, und mit einer Antriebseinheit, die dazu vorgesehen ist, zum motorischen Zuziehen der Kraftfahrzeugtür das Schließelement translatorisch zu bewegen, und die einen Spindeltrieb mit einem angetriebenen Spindelelement und einem getriebenen Spindelelement, das bewegungstechnisch mit dem Schließelement verbunden ist, aufweist, vorgeschlagen worden.

Die Aufgabe der Erfindung besteht insbesondere darin, ein komfortables Schließen der Kraftfahrzeugtür besonders einfach zu realisieren. Die Aufgabe wird erfindungsgemäß durch eine Zuzieheinheit mit den Merkmalen des Patentanspruchs 1, durch ein Kraftfahrzeug mit den Merkmalen des Patentanspruchs 14 und durch eine Verwendung mit den Merkmalen des Patentanspruchs 18 gelöst, während vorteilhafte Ausgestaltungen und Weiterbildungen der Erfindung den Unteransprüchen entnommen werden können.

### Vorteile der Erfindung

Die Erfindung geht aus von einer Zuzieheinheit für eine Kraftfahrzeugtür, insbesondere einer Kraftfahrzeugschiebetür, mit zumindest einem translatorisch beweglich angeordneten Schließelement, das dazu vorgesehen ist, mit einer Schlosseinheit der Kraftfahrzeugtür zusammenzuwirken, und mit einer Antriebseinheit, die dazu vorgesehen ist, zum motorischen Zuziehen der Kraftfahrzeugtür das zumindest eine Schließelement translatorisch zu bewegen, und die einen Spindeltrieb mit zumindest einem angetriebenen Spindelelement und zumindest einem getriebenen Spindelelement, das bewegungstechnisch mit dem Schließelement verbunden ist, aufweist.

Es wird vorgeschlagen, dass das angetriebene Spindelelement axial beweglich angeordnet ist. Dadurch kann ein konstruktiv besonders einfacher und robuster Antrieb für das Schließelement bereitgestellt werden, wodurch die Kraftfahrzeugtür ausgehend von einer, insbesondere manuell eingestellten, Türposition selbstständig in eine andere Türposition gezogen werden kann. Dadurch muss ein Bediener zur Einstellung der weiteren Türposition lediglich eine Türposition einstellen, die in einem Schließvorgang vor der weiteren Türposition liegt, wodurch ein durch den Bediener notwendiger Kraftaufwand zum Schließen der Kraftfahrzeugtür reduziert und der Schließvorgang damit komfortabler gestaltet werden kann. Durch den konstruktiv besonders einfach ausgestalteten Antrieb können Kosten und eine Komplexität der Zuzieheinheit verringert werden, wodurch der Schließvorgang besonders preisgünstig und konstruktiv einfach zumindest unterstützt werden kann. Weiter kann eine besonders montagefreundliche Zuzieheinheit bereitgestellt werden, wodurch ein Montieren der Zuzieheinheit und insbesondere ein Nachrüsten des Kraftfahrzeugs mit der Zuzieheinheit besonders einfach und preiswert gestaltet werden kann. Durch eine axial bewegliche Anordnung des angetriebenen Spindelelements kann das angetriebene Spindelelement einer zuschlagenden Kraftfahrzeugtür nachgeben, wodurch eine Beschädigung des Spindeltriebs vermieden werden kann. Dadurch kann ein komfortables Schließen der Kraftfahrzeugtür besonders einfach realisiert werden. Es kann eine halbautomatisch schließende Kraftfahrzeugtür besonders einfach bereitgestellt werden, die im Vergleich zu vollautomatisch schließenden Kraftfahrzeugtüren preiswerter und hinsichtlich eines Verletzungsrisikos durch ein Einklemmen beim Schließen der Kraftfahrzeugtür sicherer ist.

Unter "einer Schlosseinheit und einem Schließelement, die zusammenwirken" soll insbesondere verstanden werden, dass die Schlosseinheit und das Schließelement formschlüssig einander erfassen und/oder formschlüssig ineinandergreifen, wodurch die Kraftfahrzeugtür durch das Schließelement bewegbar ist. Das Schließelement ist vorzugsweise als ein Fangelement ausgebildet, das dazu vorgesehen ist, in Abhängigkeit der Türposition die Schlosseinheit der Kraftfahrzeugtür zu greifen und/oder zu fassen. Vorzugsweise ist die Zuzieheinheit dazu vorgesehen, die Kraftfahrzeugtür ausgehend von einer ersten Türposition zumindest zeitweise in eine zweite Türposition motorisch zu ziehen. Unter einer "zweiten Türposition" soll insbesondere eine Türposition verstanden werden, die entlang einer Zuziehrichtung betrachtet nach der ersten Türposition folgt, wobei die erste Türposition vorzugsweise manuell, d.h. händisch durch eine Kraft des Bedieners, und die zweite Türposition motorisch durch die Zuzieheinheit eingestellt wird. Unter "zumindest zeitweise" soll insbesondere verstanden werden, dass in dem Schließvorgang die zweite Türposition als Zwischenposition eingestellt wird, wobei die zweite Türposition ausgehend von der ersten Türposition eingestellt wird und anschließend ausgehend von der zweiten Türposition die erste Türposition oder eine dritte Türposition, die in dem Schließvorgang zwischen der ersten Türposition und der zweiten Türposition angeordnet ist, eingestellt wird. Unter "ziehen" soll insbesondere eine Bewegung in eine Zuziehrichtung verstanden werden, durch die das Schließelement die Kraftfahrzeugtür zur sich her bewegt und/oder durch die die Kraftfahrzeugtür in Richtung einer Türdichtung bewegt wird. Zum Zuziehen der Kraftfahrzeugtür wird mittels des Schließelements eine Kraft in Richtung Kraftquelle auf die Kraftfahrzeugtür ausgeübt. Die Zuziehrichtung ist vorteilhaft zumindest im Wesentlichen senkrecht zu einer Öffnungsebene, die durch eine durch die Kraftfahrzeugtür verdeckbare Öffnung und/oder durch einen durch die Kraftfahrzeugtür verdeckbaren Zugang in einen Kraftfahrzeuginnenraum definiert ist, orientiert. Unter "im Wesentlichen senkrecht" soll insbesondere eine Abweichung von einer senkrechten Orientierung und/oder Anordnung verstanden werden, die maximal 40 Grad, vorteilhaft maximal 20 Grad, besonders vorteilhaft maximal 10 Grad und ganz besonders vorteilhaft maximal 5 Grad beträgt. Unter einem "angetriebenen Spindelelement" soll insbesondere ein Spindelelement verstanden werden, das mittels eines Stellmotors drehend bewegbar ist. Unter einem "getriebenen Spindelelement" soll insbesondere ein Spindelelement verstanden werden, das mittels des angetriebenen Spindelelements translatorisch bewegbar ist. Vorzugsweise sind das angetriebene Spindelelement und das getriebene Spindelelement getrieblich miteinander verbunden, wodurch eine motorisch verursachte Drehbewegung des angetriebenen Spindelelements eine translatorische Bewegung des getriebenen Spindelelements zur Folge hat. Unter einer "bewegungstechnischen Verbindung" soll insbesondere eine Verbindung zumindest zweier Elemente verstanden werden, durch die eine Bewegung des einen Elements auf das andere Element übertragen wird und/oder durch die eine Bewegung des einen Elements zu einer Bewegung des anderen Elements führt. Zur bewegungstechnischen Verbindung können die zumindest zwei Elemente form-, kraft- und/oder stoffschlüssig miteinander verbunden sein oder auch einstückig miteinander ausgebildet sein. Ferner ist es aber auch denkbar, dass die zumindest zwei Elemente zur bewegungstechnischen Verbindung dämpfend mittels eines Dämpfungselements miteinander verbunden sind, wie beispielsweise mittels eines Gummielements. Der Begriff "axial" ist insbesondere auf eine Drehachse des angetriebenen Spindelelements bezogen, sodass der Ausdruck "axial" eine Richtung bezeichnet, die auf der Drehachse oder zumindest im Wesentlichen parallel zu dieser verläuft. Unter "im Wesentlichen parallel" soll insbesondere eine Abweichung von einer parallelen Orientierung und/oder Anordnung verstanden werden, die maximal 40 Grad, vorteilhaft maximal 20 Grad, besonders vorteilhaft maximal 10 Grad und ganz besonders vorteilhaft maximal 5 Grad beträgt. Unter "vorgesehen" soll insbesondere speziell programmiert, ausgelegt, ausgestattet und/oder angeordnet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Zur Bereitstellung einer besonders langlebigen Zuzieheinheit wird ferner vorgeschlagen, dass die Zuzieheinheit zumindest ein Federelement aufweist, das dazu vorgesehen ist, zumindest einen Teil des Spindeltriebs gegen Stoßkräfte abzustützen, wodurch eine Beschädigung oder eine Zerstörung der Zuzieheinheit verhindert werden kann. Das zumindest eine Federelement ist vorzugsweise dazu vorgesehen, das angetriebene Spindelelement und/oder das getriebene Spindelelement gegen Stoßkräfte abzustützen.

Insbesondere ist es vorteilhaft, wenn das Federelement eine Federkraft bereitstellt, die zumindest im Wesentlichen parallel zur Drehachse des angetriebenen Spindelelements orientiert ist, wodurch zumindest ein Teil des Spindeltriebs zuverlässig gegen Stoßkräfte abgestützt werden kann. Unter einer "Federkraft, die zumindest im Wesentlichen parallel zur Drehachse orientiert ist" soll insbesondere eine Federkraft verstanden werden, deren Wirkrichtung zumindest im Wesentlichen parallel zur Drehachse orientiert ist.

Weiter ist es vorteilhaft, wenn die Zuzieheinheit ein Gehäuse aufweist und das Federelement wirkungsmäßig zwischen dem angetriebenen Spindelelement und dem Gehäuse angeordnet ist, wodurch das zum Abstützen des angetriebenen Spindelelements vorgesehene Federelement vorteilhaft angeordnet werden kann. Das Federelement ist vorzugsweise axial zwischen dem angetriebenen Spindelelement und dem Gehäuse angeordnet.

Ferner ist es vorteilhaft, wenn die Zuzieheinheit zumindest einen Türpositionssensor aufweist, der dazu vorgesehen ist, zur Erfassung zumindest einer Türposition der Kraftfahrzeugtür mit einer Magneteinheit der Kraftfahrzeugtür wechselzuwirken. Dadurch kann die Türposition zuverlässig erfasst werden, wodurch ein Auslösen der Zuziehhilfe optimiert werden kann. Der Türpositionssensor ist vorzugsweise dazu vorgesehen, zumindest zwei unterschiedliche Türpositionen in Abhängigkeit eines Magnetfelds der Magneteinheit zu erfassen.

In einer besonders vorteilhaften Ausgestaltung weist der Türpositionssensor zur Erfassung zumindest einer Türposition der Kraftfahrzeugtür zumindest einen Reed-Kontakt auf, wodurch eine besonders kompakte Zuzieheinheit realisiert werden kann.

Um eine Beschädigung des Türpositionssensors zu vermeiden, wird des Weiteren vorgeschlagen, dass die Zuzieheinheit zumindest ein Federelement aufweist, das dazu vorgesehen ist, zumindest einen Teil des Türpositionssensors gegen Stoßkräfte abzustützen. Dadurch kann eine Lebensdauer des Türpositionssensors erhöht werden, wodurch eine Kundenakzeptanz gesteigert werden kann. Vorzugsweise stellt das Federelement eine Federkraft mit einer Wirkrichtung bereit, die zumindest im Wesentlichen parallel zur Drehachse des angetriebenen Spindelelements orientiert ist.

Ferner wird vorgeschlagen, dass die Zuzieheinheit zumindest einen mechanischen Anschlag für das getriebene Spindelelement aufweist, der innerhalb des angetriebenen Spindelelements angeordnet ist, wobei der Anschlag bewegungstechnisch mit dem angetriebenen Spindelelement verbunden ist, wodurch auf eine besonders kompakte Art und Weise die translatorische Bewegung des getriebenen Spindelelements in eine erste Richtung begrenzt werden kann. Vorteilhaft begrenzt der Anschlag formschlüssig die translatorische Bewegung des getriebenen Spindelelements in die Zuziehrichtung.

Insbesondere ist es vorteilhaft, wenn die Zuzieheinheit zumindest einen mechanischen Anschlag für das getriebene Spindelelement aufweist, der außerhalb des angetriebenen Spindelelements angeordnet ist, wobei der Anschlag bewegungstechnisch mit dem getriebenen Spindelelement verbunden ist. Dadurch kann die translatorische Bewegung des getriebenen Spindelelements besonders einfach in eine zweite, der ersten Richtung entgegen gerichtete Richtung begrenzt werden. Vorteilhaft begrenzt der Anschlag formschlüssig die translatorische Bewegung des getriebenen Spindelelements in eine der Zuziehrichtung entgegen gerichtete Richtung. Durch die Anschläge kann mittels einer Detektion und/oder einer Überwachung einer Leistungsaufnahme des Stellmotors eine Position des getriebenen Spindelelements ermitteln werden, wodurch auf eine teure Sensorik zur Erfassung der Position des getriebenen Spindelelements verzichtet werden kann.

Zur Erhöhung einer Sicherheit ist es vorteilhaft, wenn die Zuzieheinheit eine Steuer- und/oder Regeleinheit aufweist, die dazu vorgesehen ist, zum motorischen Zuziehen der Kraftfahrzeugtür die Antriebseinheit in einer durch eine Hauptraststellung der Schlosseinheit definierten Türposition der Kraftfahrzeugtür zu aktivieren. Dadurch kann realisiert werden, dass die Kraftfahrzeugtür erst aus der durch die Hauptraststellung definierten Türposition motorisch zugezogen wird, wodurch aufgrund eines kleinen Öffnungsspalts in dieser Türposition ein Einklemmrisiko zumindest reduziert werden kann.

Besonders bevorzugt weist die Steuer- und/oder Regeleinheit eine Überziehfunktion auf, die dazu vorgesehen ist, die Kraftfahrzeugtür über die durch die Hauptraststellung definierte Türposition hinaus motorisch zu bewegen, wodurch sämtliche Schlosseinheiten der Kraftfahrzeugtür zuverlässig in Eingriff mit zugehörigen Schließelementen gebracht werden können. Die Überziehfunktion ist vorzugsweise dazu vorgesehen, in dem Schließvorgang die Kraftfahrzeugtür zuerst über die durch die Hauptraststellung definierte Türposition in eine überzogene Türposition zu überziehen und anschließend ausgehend von der überzogenen Türposition die Kraftfahrzeugtür entgegen der Zuziehrichtung wieder in die durch die Hauptraststellung definierte Türposition zurückzubewegen oder die Einstellung der durch die Hauptraststellung definierten Türposition ausgehend von der überzogenen Türposition zu erlauben.

Weiter ist es vorteilhaft, wenn das getriebene Spindelelement dazu vorgesehen ist, drehfest mit dem Gehäuse der Zuzieheinheit verbunden zu werden, und/oder wenn das Schließelement dazu vorgesehen ist, drehfest mit einer Karosserie des Kraftfahrzeugs verbunden zu werden, wodurch verhindert werden kann, dass das getriebene Spindelelement sich mit dem angetriebenen Spindelelement mit dreht.

In einer weiteren erfindungsgemäßen Ausgestaltung weist das angetriebene Spindelelement zum translatorischen Verschieben des getriebenen Spindelelements ein Innengewinde auf, wodurch eine konstruktiv besonders vorteilhafte Antriebseinheit realisiert werden kann. Das getriebene Spindelelement ist innerhalb des angetriebenen Spindelelements axial verschiebbar angeordnet.

Weiter wird erfindungsgemäß ein Kraftfahrzeug, insbesondere ein Kastenwagen, vorgeschlagen, mit zumindest einer Kraftfahrzeugtür, die dazu vorgesehen ist, wahlweise einen Kraftfahrzeuginnenraum zu verschließen oder zu öffnen, mit zumindest einer Kraftfahrzeugsäule, die dazu vorgesehen ist, von der Kraftfahrzeugtür in zumindest einer Türposition verdeckt zu werden, mit einer zum Verriegeln der Kraftfahrzeugtür vorgesehenen Schlosseinheit, die in die Kraftfahrzeugtür integriert ist, und mit einer an der Kraftfahrzeugsäule befestigen Zuzieheinheit, insbesondere einer erfindungsgemäßen Zuzieheinheit, die ein zumindest im Wesentlichen außerhalb der Kraftfahrzeugsäule angeordnetes Gehäuse aufweist. Dadurch kann die Zuzieheinheit besonders einfach montiert werden, wodurch ein Nachrüsten des Kraftfahrzeugs mit der Zuzieheinheit vereinfacht werden kann. Dadurch kann ohne großen Aufwand und ohne hohe Kosten das Kraftfahrzeug mit einer besonders komfortabel schließbaren Kraftfahrzeugtür ausgestattet werden, wodurch ein komfortables Schließen der Kraftfahrzeugtür besonders einfach realisiert werden kann. Vorzugsweise ist die Schlosseinheit des Kraftfahrzeugs als ein Serienschloss ausgebildet. Durch die Nachrüstung des Kraftfahrzeugs mit der Zuzieheinheit kann das Serienschloss des Kraftfahrzeugs zum Verriegeln der Kraftfahrzeugtür weiter genutzt werden. Unter "zumindest im Wesentlichen außerhalb" soll insbesondere verstanden werden, dass zumindest 50%, vorteilhaft zumindest 80% und besonders vorteilhaft zumindest 90% des Gehäuses außerhalb der Kraftfahrzeugsäule angeordnet ist.

Für das Kraftfahrzeug ist es insbesondere vorteilhaft, wenn das Gehäuse der Zuzieheinheit in den Kraftfahrzeuginnenraum hineinragt, wodurch die Montage und insbesondere die Nachrüstung weiter vereinfacht werden kann.

Weiter ist es für das Kraftfahrzeug vorteilhaft, wenn die Zuzieheinheit zumindest ein zum motorischen Zuziehen der Kraftfahrzeugtür vorgesehenes Schließelement aufweist, das zumindest im Wesentlichen parallel zu einer Kraftfahrzeugquerrichtung translatorisch beweglich angeordnet ist, wodurch die Kraftfahrzeugtür besonders effektiv zugezogen werden kann. Unter einer "Kraftfahrzeugquerrichtung" soll insbesondere eine Erstreckungsrichtung des Kraftfahrzeugs verstanden werden, die zumindest im Wesentlichen parallel zu einer Breite des Kraftfahrzeugs und/oder zumindest im Wesentlichen senkrecht zu einer Länge des Kraftfahrzeugs orientiert ist. Die Kraftfahrzeugquerrichtung ist vorzugsweise zumindest im Wesentlichen senkrecht zu einer Hochachse des Kraftfahrzeugs orientiert.

Ferner ist es für das Kraftfahrzeug vorteilhaft, wenn das Kraftfahrzeug zumindest ein Versteifungselement aufweist, das gegenüberliegend zur Zuzieheinheit an der Kraftfahrzeugsäule angeordnet ist, wodurch die Kraftfahrzeugsäule zumindest im Bereich der Zuzieheinheit versteift werden kann. Durch das Versteifungselement können ferner die Zuzieheinheit positioniert und Toleranzabweichungen ausgeglichen werden.

Erfindungsgemäß wird ferner eine Verwendung einer Zuzieheinheit, insbesondere einer erfindungsgemäßen Zuzieheinheit, zur Nachrüstung eines Kraftfahrzeugs, insbesondere eines Kastenwagens, vorgeschlagen. Dadurch kann ein Kraftfahrzeug, insbesondere ein Serienkraftfahrzeug, besonders einfach mit der Zuzieheinheit nachgerüstet werden, wodurch das Kraftfahrzeug unter Ausnutzung des Serienschlosses mit einer besonders komfortabel schließbaren Kraftfahrzeugtür nachgerüstet werden kann. Dadurch kann ein komfortables Schließen der Kraftfahrzeugtür besonders einfach realisiert werden. Vorzugsweise wird die Zuzieheinheit, insbesondere die erfindungsgemäße Zuzieheinheit, zum Nachrüsten des Kraftfahrzeugs, insbesondere des Kastenwagens, zu einem Wohnwagen, einem Wohnmobil oder dergleichen verwendet.

Für die Verwendung wird weiter vorgeschlagen, dass die Zuzieheinheit ein Serienschließelement des Kraftfahrzeugs ersetzt, wodurch das Serienschloss zur Verriegelung der Kraftfahrzeugtür und bereits vorhandene Befestigungsstellen zur Anordnung der Zuzieheinheit genutzt werden können.,

### Zeichnungen

Weitere Vorteile ergeben sich aus der folgenden Figurenbeschreibung. In den Figuren ist ein Ausführungsbeispiel der Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: schematisiert ein Kraftfahrzeug mit einer Zuzieheinheit für eine Kraftfahrzeugtür des Kraftfahrzeugs,
- Fig. 2: schematisiert die Zuzieheinheit, die an einer Kraftfahrzeugsäule des Kraftfahrzeugs angeordnet ist,
- Fig. 3: schematisiert die Zuzieheinheit perspektivisch dargestellt,
- Fig. 4: schematisiert die Zuzieheinheit entlang einer ersten Schnittlinie teilweise geschnitten dargestellt,
- Fig. 5: schematisiert die Zuzieheinheit entlang einer zweiten Schnittlinie teilweise geschnitten dargestellt und
- Fig. 6: die Kraftfahrzeugsäule mit Befestigungsstellen für die Zuzieheinheit schematisiert dargestellt.

### Beschreibung der Ausführungsbeispiele

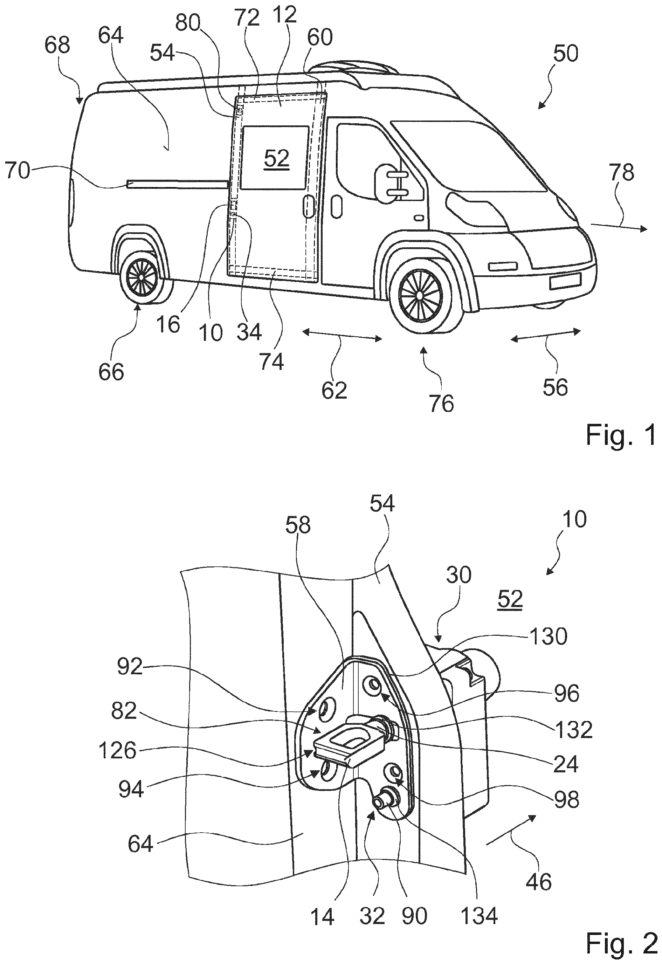

Figur 1 zeigt schematisiert ein Kraftfahrzeug 50. Das Kraftfahrzeug 50 ist als ein Kastenwagen ausgebildet. Das Kraftfahrzeug 50 ist als ein Wohnwagen ausgebildet. Es ist als ein zu einem Wohnwagen umfunktioniertes Kraftfahrzeug ausgebildet. Das Kraftfahrzeug 50 ist als ein zu einem Wohnwagen umfunktioniertes Serienkraftfahrzeug ausgebildet.

Das Kraftfahrzeug 50 weist einen Kraftfahrzeuginnenraum 52 und eine Kraftfahrzeugtür 12 auf, die dazu vorgesehen ist, wahlweise den Kraftfahrzeuginnenraum 52 zu verschließen oder zu öffnen. Zum Öffnen des Kraftfahrzeuginnenraums 52 öffnet die Kraftfahrzeugtür 12 einen Zugang in den Kraftfahrzeuginnenraum 52 und zum verschließen des Kraftfahrzeuginnenraums 52 versperrt die Kraftfahrzeugtür 12 diesen Zugang. Der Zugang ist als eine seitlich am Kraftfahrzeug 50 angeordnete Öffnung ausgebildet.

Das Kraftfahrzeug 50 weist weiter eine erste Kraftfahrzeugsäule 60 und eine zweite Kraftfahrzeugsäule 54 auf, die den durch die Kraftfahrzeugtür 12 verschließbaren Zugang des Kraftfahrzeuginnenraums 52, entlang einer Längsrichtung 62 des Kraftfahrzeugs 50 betrachtet, begrenzen. Die Kraftfahrzeugsäulen 54, 60 sind dazu vorgesehen, in einer geschlossenen Türposition von der Kraftfahrzeugtür 12 verdeckt zu werden. Die Kraftfahrzeugtür 12 verdeckt in der geschlossenen Türposition die Kraftfahrzeugsäulen 54, 60. Die Kraftfahrzeugtür 12 ist, entlang der Längsrichtung 62 betrachtet, zumindest in der geschlossenen Türposition zwischen Hinterrädern 66 und Vorderrädern 76 des Kraftfahrzeugs 50 angeordnet. Die erste Kraftfahrzeugsäule 60 ist als eine B-Säule ausgebildet. Die zweite Kraftfahrzeugsäule 54 ist als eine C-Säule ausgebildet.

Ferner weist das Kraftfahrzeug 50 eine Seitenwand 64 auf, die an die zweite Kraftfahrzeugsäule 54 anschließt. Die Seitenwand 64 ist im Bereich von Hinterrädern 66 des Kraftfahrzeugs 50 angeordnet. Die Seitenwand 64 erstreckt sich seitlich, entlang der Längsrichtung 62 betrachtet, ausgehend von der zweiten Kraftfahrzeugsäule 54 in Richtung eines Kraftfahrzeughecks 68 des Kraftfahrzeugs 50. Sie erstreckt sich, entlang der Längsrichtung 62 betrachtet, ausgehend von der zweiten Kraftfahrzeugsäule 54, bis zu einer nicht näher dargestellten Heckklappe des Kraftfahrzeugs 50. In Figur 1 ist die Kraftfahrzeugtür 12 in der geschlossenen Türposition dargestellt und versperrt damit den Zugang des Kraftfahrzeuginnenraums 52.

Die Kraftfahrzeugtür 12 ist beweglich an einer Karosserie des Kraftfahrzeugs 50 angeordnet. Die Kraftfahrzeugtür 12 ist an einer Fahrzeugseite des Kraftfahrzeugs 50 angeordnet. Dabei ist die Kraftfahrzeugtür 12 im Wesentlichen parallel zu einer Öffnungsebene des Zugangs verschiebbar und am Ende eines Schließvorgangs senkrecht zur Öffnungsebene in Richtung des Kraftfahrzeuginnenraums 52 hineinkippbar. Die Kraftfahrzeugtür 12 ist als eine Kraftfahrzeugschiebetür ausgebildet.

Zur Führung und Aufnahme der Kraftfahrzeugtür 12 weist das Kraftfahrzeug 50 drei Führungselemente 70, 72, 74 auf. Das erste Führungselement 70 ist an der Seitenwand 64 angeordnet. Die Kraftfahrzeugtür 12 verdeckt in einer offenen Türposition das erste Führungselement 70 zumindest teilweise. In der offenen Türposition öffnet die Kraftfahrzeugtür 12 den Zugang in den Kraftfahrzeuginnenraum 52, wodurch der Kraftfahrzeuginnenraum 52 durch den Zugang betreten und verlassen werden kann. Das zweite Führungselement 72 ist an einem Fahrzeugdach und damit im Bereich einer Oberkante der Kraftfahrzeugtür 12 angeordnet. Das dritte Führungselement 74 ist an einem Fahrzeugboden und damit im Bereich einer Unterkante der Kraftfahrzeugtür 12 angeordnet. Die Kraftfahrzeugtür 12 verdeckt in der geschlossenen Türposition das zweite Führungselement 72 und das dritte Führungselement 74. Das zweite Führungselement 72 und das dritte Führungselement 74 sind, entlang der Längsrichtung 62 betrachtet, zwischen den Hinterrädern 66 und den Vorderrädern 76 des Kraftfahrzeugs 50 angeordnet. Das zweite Führungselement 72 und das dritte Führungselement 74 sind, entlang der Längsrichtung 62 betrachtet, zumindest hauptsächlich zwischen den Kraftfahrzeugsäulen 54, 60 angeordnet. Entlang einer Hochachse des Kraftfahrzeugs 50 betrachtet ist das erste Führungselement 70 zwischen dem zweiten Führungselement 72 und dem dritten Führungselement 74 angeordnet. Die Führungselemente 70, 72, 74 sind jeweils als eine Führungsschiene ausgebildet.

Das Kraftfahrzeug 50 umfasst weiter einen nicht näher dargestellten Führungsschlitten, der an der Kraftfahrzeugtür 12 befestigt und in dem ersten Führungselement 70 geführt ist, einen nicht näher dargestellten Halter, der an der Kraftfahrzeugtür 12 befestigt und in dem zweiten Führungselement 72 geführt ist, und einen nicht dargestellten Halter, der an der Kraftfahrzeugtür 12 befestigt und in dem dritten Führungselement 74 geführt ist.

Die Führungselemente 70, 72, 74 weisen jeweils an einem in eine Vorwärtsfahrtrichtung 78 des Kraftfahrzeugs 50 gerichteten Ende eine nicht näher dargestellte Krümmung auf, so dass die Kraftfahrzeugtür 12, wenn sie sich einem Deckungszustand zum Zugang annähert, senkrecht zur Öffnungsebene zum Kraftfahrzeuginnenraum 52 hingeführt wird. Durch die Krümmung sind die Führungselemente 70, 72, 74 an dem jeweiligen Ende in Richtung des Kraftfahrzeuginnenraums 52 gebogen, wodurch die Kraftfahrzeugtür 12 beim Überwinden der Krümmungen gegen die Karosserie des Kraftfahrzeugs 50 gedrückt wird. Dabei wird die Kraftfahrzeugtür 12 gegen eine nicht dargestellte Türdichtung des Kraftfahrzeugs 50 und damit gegen einen Druck der Türdichtung gedrückt.

Zur wahlweisen Verriegelung und Entriegelung der Kraftfahrzeugtür 12 weist das Kraftfahrzeug 50 eine erste Schlosseinheit 16 und eine zweite Schlosseinheit 80 auf. Die zwei Schlosseinheiten 16, 80 sind separat voneinander ausgebildet. Sie sind unabhängig voneinander. Die zwei Schlosseinheiten 16, 80 sind in die Kraftfahrzeugtür 12 integriert. Entlang der Hochachse des Kraftfahrzeugs 50 betrachtet ist die erste Schlosseinheit 16 unterhalb des ersten Führungselements 70 und die zweite Schlosseinheit 80 oberhalb des ersten Führungselements 70 angeordnet. Die Schlosseinheiten 16, 80 weisen jeweils eine nicht näher dargestellte Drehfalle auf. Die Schlosseinheiten 16, 80 sind serienmäßig in der Kraftfahrzeugtür 12 angeordnet. Sie sind jeweils als ein Serienschloss ausgebildet.

Zur Unterstützung des Schließvorgangs, in dem die Kraftfahrzeugtür 12 ausgehend von der offenen Türposition in die geschlossene Türposition bewegt wird, weist das Kraftfahrzeug 50 eine Zuzieheinheit 10 auf (vgl. auch Fig. 2 bis Fig. 5). Die Zuzieheinheit 10 zieht ausgehend von einer durch einen Bediener manuell eingestellten Türposition die Kraftfahrzeugtür 12 selbstständig und automatisch gegen die Türdichtung. Durch die Zuzieheinheit 10 erfolgt der Schließvorgang halbautomatisch. Dabei muss der Bediener zum Auslösen der Zuzieheinheit 10 eine bestimmte, manuell einstellbare Türposition einstellen. Diese bestimmte, manuell einstellbare Türposition ist als eine die Zuzieheinheit 10 auslösende Türposition ausgebildet. Die Zuzieheinheit 10 ist als eine Zuziehhilfe ausgebildet.

Die Zuzieheinheit 10 ist an der zweiten Kraftfahrzeugsäule 54 angeordnet. Sie ist an der C-Säule angeordnet. Dabei weist die Zuzieheinheit 10 ein Gehäuse 30 auf, das im Wesentlichen außerhalb der Kraftfahrzeugsäule 54 angeordnet ist. Das Gehäuse 30 ist im Wesentlichen in dem Kraftfahrzeuginnenraum 52 angeordnet. Das Gehäuse 30 ragt ausgehend von der zweiten Kraftfahrzeugsäule 54 in den Kraftfahrzeuginnenraum 52 hinein. Es liegt an einer dem Kraftfahrzeuginnenraum 52 zugewandten Seite der zweiten Kraftfahrzeugsäule 54 an. Das Gehäuse 30 ist fest an der zweiten Kraftfahrzeugsäule 54 angebracht.

Das Gehäuse 30 ist zweiteilig ausgebildet. Es weist einen ersten Gehäuseteil 118 und einen zweiten Gehäuseteil 120 auf, die fest miteinander verbunden sind. Das erste Gehäuseteil 118 liegt an der zweiten Kraftfahrzeugsäule 54 an. Sie weist eine Anlagefläche auf, welche die dem Kraftfahrzeuginnenraum 52 zugewandte Seite der zweiten Kraftfahrzeugsäule 54 kontaktiert. Die beiden Gehäuseteile 118, 120 sind als Gehäusehalbschalen ausgebildet.

Die Zuzieheinheit 10 für die Kraftfahrzeugtür 12 weist ein translatorisch beweglich angeordnetes Schließelement 14 auf, das dazu vorgesehen ist, mit einer der Schlosseinheiten 16, 80 der Kraftfahrzeugtür 12 zusammenzuwirken. Das beweglich angeordnete Schließelement 14 ist der ersten Schlosseinheit 16 zugeordnet. Es ist dazu vorgesehen, mit der ersten Schlosseinheit 16 der Kraftfahrzeugtür 12 zusammenzuwirken. Dabei ist das beweglich angeordnete Schließelement 14 dazu vorgesehen, in einer Türposition der Kraftfahrzeugtür 12 mit der ersten Schlosseinheit 16 zusammenzuwirken, in der der Zugang des Kraftfahrzeuginnenraums 52 von der Kraftfahrzeugtür 12 zumindest teilweise versperrt ist. Das beweglich angeordnete Schließelement 14 der Zuzieheinheit 10 ist parallel zu einer Kraftfahrzeugquerrichtung 56 des Kraftfahrzeugs 50 translatorisch beweglich angeordnet. Das beweglich angeordnete Schließelement 14 ist relativ zum Gehäuse 30 translatorisch beweglich angeordnet. Es ragt aus dem Gehäuse 30 heraus. Das beweglich angeordnete Schließelement 14 ragt aus dem ersten Gehäuseteil 118 heraus.

Um mit der ersten Schlosseinheit 16 zusammenzuwirken, weist das beweglich angeordnete Schließelement 14 einen Fangbereich 82 auf, der außerhalb des Kraftfahrzeuginnenraums 52 angeordnet ist. Der Fangbereich 82 ist außerhalb des Gehäuses 30 angeordnet. Im Bezug zur zweiten Kraftfahrzeugsäule 54 ist der Fangbereich 82 gegenüberliegend zum Gehäuse 30 angeordnet. Das beweglich angeordnete Schließelement 14 greift durch die zweite Kraftfahrzeugsäule 54 hindurch. Der Fangbereich 82 ist bügelförmig ausgebildet. Das beweglich angeordnete Schließelement 14 ist als ein Schließbügel ausgebildet. Grundsätzlich kann das beweglich angeordnete Schließelement 14 auch als ein Schließhaken, ein Schließbolzen, ein Schließkeil oder dergleichen ausgebildet sein.

Beim Zusammenwirken der ersten Schlosseinheit 16 und des beweglich angeordneten Schließelements 14 greift die Drehfalle der ersten Schlosseinheit 16 in den Fangbereich 82 des beweglich angeordneten Schließelements 14 ein. Die Drehfalle der ersten Schlosseinheit 16 greift formschlüssig in den Fangbereich 82 des beweglich angeordneten Schließelements 14 ein. Die Drehfalle der ersten Schlosseinheit 16 weist eine offene Stellung, eine teilweise geschlossene Stellung und eine vollständig geschlossene Stellung auf. In der offenen Stellung fehlt ein Zusammenwirken mit dem Schließelement 14. In der geschlossenen Stellung liegt eine nicht dargestellte Hauptrastklinke der ersten Schlosseinheit 16 an einer nicht dargestellten Hauptrast der Drehfalle an. Die geschlossene Stellung ist als eine Hauptraststellung der ersten Schlosseinheit 16 ausgebildet, in der die Kraftfahrzeugtür 12 vollständig geschlossen ist. In der Hauptraststellung kann die Drehfalle zur Verriegelung der Kraftfahrzeugtür 12 verriegelt werden. Die teilweise geschlossene Stellung ist als eine Vorraststellung der ersten Schlosseinheit 16 ausgebildet. Bei der Vorraststellung ist der Schließvorgang der ersten Schlosseinheit 16 und der Kraftfahrzeugtür 12 unvollständig abgeschlossen. In der Vorraststellung ist die Drehfalle bewegungsblockiert und verhindert, dass das beweglich angeordnete Schließelement 14 freigegeben wird. In der Vorraststellung greift eine nicht dargestellte Vorrastklinke der ersten Schlosseinheit 16 in die Drehfalle und kontaktiert formschlüssig eine nicht dargestellte Vorrast der Drehfalle. Die erste Schlosseinheit 16 und das beweglich angeordnete Schließelement 14 wirken in der Vorraststellung und in der Hauptraststellung zusammen. Sie wirken in einer durch die Vorraststellung definierten Türposition der Kraftfahrzeugtür 12 und in einer durch die Hauptraststellung definierten Türposition der Kraftfahrzeugtür 12 zusammen. Sie wirken damit zusammen, wenn sich die Kraftfahrzeugtür 12 in einer Türposition befindet, in der sich die erste Schlosseinheit 16 in der Vorraststellung oder in der Hauptraststellung befindet.

Zum Zusammenwirken mit der zweiten Schlosseinheit 80 weist das Kraftfahrzeug 50 ein nicht näher dargestelltes Schließelement auf, das starr mit der Karosserie des Kraftfahrzeugs 50 verbunden ist. Das starr angeordnete Schließelement der zweiten Schlosseinheit 80 und das beweglich angeordnete Schließelement 14 der ersten Schlosseinheit 16 sind beabstandet zueinander angeordnet. Das starr angeordnete Schließelement ist der zweiten Schlosseinheit 80 zugeordnet. Das starr angeordnete Schließelement ist dazu vorgesehen, mit der zweiten Schlosseinheit 80 zusammenzuwirken. Die zweite Schlosseinheit 80 ist analog zur ersten Schlosseinheit 16 ausgebildet. Die Drehfalle der zweiten Schlosseinheit 80 weist eine offene Stellung, eine Vorraststellung und eine Hauptraststellung auf. Das starr angeordnete Schließelement ist als ein Schließbolzen ausgebildet. Grundsätzlich kann das starr verbundene Schließelement auch als ein Schließhaken, ein Schließbügel, ein Schließkeil oder dergleichen ausgebildet sein.

Zum motorischen Zuziehen der Kraftfahrzeugtür 12 weist die Zuzieheinheit 10 eine Antriebseinheit 18 auf, die dazu vorgesehen ist, das beweglich angeordnete Schließelement 14 translatorisch zu bewegen. Die Antriebseinheit 18 ist dabei dazu vorgesehen, die Kraftfahrzeugtür 12 ausgehend von einer Türposition, in der die erste Schlosseinheit 16 und das beweglich angeordnete Schließelement 14 zusammenwirken, in eine Zuziehrichtung 46 motorisch zu bewegen. Die Zuziehrichtung 46 ist parallel zur Kraftfahrzeugquerrichtung 56 orientiert. Sie ist senkrecht zur Längsrichtung 62 orientiert. Ausgehend von der Kraftfahrzeugtür 12 ist die Zuziehrichtung 46 in den Kraftfahrzeuginnenraum 52 gerichtet.

Die Antriebseinheit 18 weist einen Spindeltrieb 20 auf. Der Spindeltrieb 20 weist ein angetriebenes Spindelelement 22 und ein getriebenes Spindelelement 24 auf. Das getriebene Spindelelement 24 ist axial verschiebbar, aber drehfest angeordnet. Es ist gegenüber dem Gehäuse 30 axial verschiebbar, aber drehfest angeordnet. Das angetriebene Spindelelement 22 ist drehbar und axial verschiebbar angeordnet. Es ist gegenüber dem Gehäuse 30 drehbar und axial verschiebbar angeordnet.

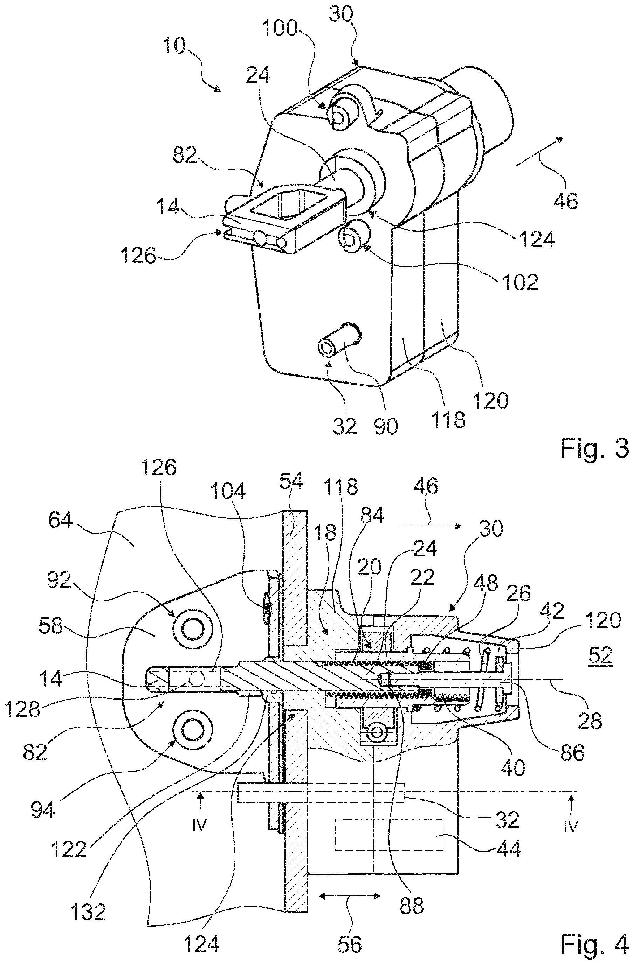

Das getriebene Spindelelement 24 ist bewegungstechnisch mit dem beweglich angeordneten Schließelement 14 verbunden. Das getriebene Spindelelement 24 greift durch die zweite Kraftfahrzeugsäule 54 hindurch. Es greift translatorisch beweglich durch die zweite Kraftfahrzeugsäule 54 hindurch. Das getriebene Spindelelement 24 ragt aus dem Gehäuse 30a heraus. Es ragt aus dem ersten Gehäuseteil 118 heraus. In der Figur 4 ist schematisch ein Schnitt durch den Spindeltrieb 20 dargestellt.

In diesem Ausführungsbeispiel sind das beweglich angeordnete Schließelement 14 und das getriebene Spindelelement 24 einstückig miteinander ausgebildet. Sie sind aus einem Stück geformt. Grundsätzlich können das beweglich angeordnete Schließelement 14 und das getriebene Spindelelement 24 auch separat voneinander ausgebildet sein. Dabei sind das beweglich angeordnete Schließelement 14 und das separat ausgebildete, getriebene Spindelelement 24 fest miteinander verbunden. Dazu weist das getriebene Spindelelement 24 beispielsweise ein Außengewinde und das beweglich angeordnete Schließelement 14 ein zum Außengewinde korrespondierendes Innengewinde auf, wobei das beweglich angeordnete Schließelement 14 auf das getriebene Spindelelement 24 geschraubt und eventuell mit einer Gewindemutter gesichert ist. Grundsätzlich können das beweglich angeordnete Schließelement 14 und das getriebene Spindelelement 24 über ein Dämpfungselement, wie beispielsweise über ein Gummielement, miteinander verbunden sein.

Das angetriebene Spindelelement 22 ist dazu vorgesehen, um eine Drehachse 28 motorisch gedreht zu werden. Es ist motorisch drehbar. Dazu weist die Antriebseinheit 18 einen nicht dargestellten elektrisch betriebenen Stellmotor auf, der dazu vorgesehen ist, ein Stellmoment zum Drehen des angetriebenen Spindelelements 22 bereitzustellen. Der Stellmotor ist dazu vorgesehen, das angetriebene Spindelelement 22 in beide Drehrichtungen anzutreiben. Dabei sind eine Drehrichtung in die Zuziehrichtung 46 gerichtet, d.h. beim Antrieb des angetriebenen Spindelelements 22 in diese Drehrichtung verschiebt sich das getriebene Spindelelement 24 axial in die Zuziehrichtung 46, und die andere Drehrichtung entgegen der Zuziehrichtung 46 gerichtet, d.h. beim Antrieb des angetriebenen Spindelelements 22 in diese Drehrichtung verschiebt sich das getriebene Spindelelement 24 axial entgegen die Zuziehrichtung 46.

Zur Verdrehsicherung ist das getriebene Spindelelement 24 drehfest mit dem Gehäuse 30 und das Schließelement 14 drehfest mit der Karosserie des Kraftfahrzeugs 50 verbunden. Zur drehfesten Verbindung mit dem Gehäuse 30 weist das getriebene Spindelelement 24 eine Ausnehmung 122 auf. Die Ausnehmung 122 erstreckt sich hauptsächlich axial. Sie weist eine Haupterstreckung auf, die parallel zur Drehachse 28 des angetriebenen Spindelelements 22 angeordnet ist. Das Gehäuse 30 greift in die Ausnehmung 122 des getriebenen Spindelelements 24 ein. Dazu weist das Gehäuse 30 einen Eingriffsbereich 124 auf, der in Drehrichtung formschlüssig in die Ausnehmung 122 des getriebenen Spindelelements 24 eingreift. Das erste Gehäuseteil 118 weist den Eingriffsbereich 124 auf. Es bildet den Eingriffsbereich 124 aus. Das Gehäuse 30 greift in der Art in die Ausnehmung 122 des getriebenen Spindelelements 24 ein, so dass das getriebene Spindelelement 24 verdrehsicher, aber axial verschiebbar angeordnet ist. Die Ausnehmung 122 führt den Eingriffsbereich 124. Die Ausnehmung 122 des getriebenen Spindelelements 24 ist in Form einer Nut ausgebildet. Grundsätzlich kann das Gehäuse 30 eine Ausnehmung und das getriebene Spindelelement 24 einen Eingriffsbereich, der zur Verdrehsicherung in die Ausnehmung des Gehäuses 30 eingreift, aufweisen.

Zur drehfesten Verbindung mit der Karosserie weist das Schließelement 14 eine Ausnehmung 126 auf. Die Ausnehmung 126 ist in dem Fangbereich 82 des Schließelements 14 angeordnet. Die Ausnehmung 126 des Schließelements 14 ist außerhalb des Gehäuses 30 angeordnet. Die Ausnehmung 126 des Schließelements 14 erstreckt sich hauptsächlich axial. Sie weist eine Haupterstreckung auf, die parallel zur Drehachse 28 des angetriebenen Spindelelements 22 angeordnet ist. Die Ausnehmung 126 des Schließelements 14 ist in Form einer Nut ausgebildet.

Das Kraftfahrzeug 50 weist ein Eingriffselement 128 auf, das in die Ausnehmung 126 des Schließelements 14 eingreift. Die Ausnehmung 126 des Schließelements 14 führt das Eingriffselement 128. Das Eingriffselement 128 greift in Drehrichtung formschlüssig in die Ausnehmung 126 des Schließelements 14 ein. Das Eingriffselement 128 greift in der Art in die Ausnehmung 126 des Schließelements 14 ein, so dass das Schließelement 14 verdrehsicher, aber axial verschiebbar angeordnet ist. Das Eingriffselement 128 ist in Form eines Bolzens ausgebildet. Grundsätzlich kann das Kraftfahrzeug 50 eine Ausnehmung und das Schließelement 14 ein Eingriffselement, das zur Verdrehsicherung in die Ausnehmung des Kraftfahrzeugs 50 eingreift, aufweisen. Weiter ist es grundsätzlich denkbar, dass auf die drehfeste Verbindung des getriebenen Spindelelements 24 mit dem Gehäuse 30 oder auf die drehfeste Verbindung des Schließelements 14 mit der Karosserie verzichtet wird.

Um eine Beschädigung des Spindeltriebs 20 zu vermeiden, ist das angetriebene Spindelelement 22 axial beweglich angeordnet. Das angetriebene Spindelelement 22 ist axial beweglich in dem Gehäuse 30 gelagert. Es ist gegenüber dem Gehäuse 30 axial beweglich angeordnet. Das angetriebene Spindelelement 22 ist entlang der Drehachse 28 axial beweglich gelagert. Das angetriebene Spindelelement 22 ist drehbar und axial verschiebbar in dem Gehäuse 30 gelagert. Das angetriebene Spindelelement 22 ist dazu vorgesehen, in die Zuziehrichtung 46 nachzugeben.

Um den Stellmotor antriebstechnisch an das angetriebene Spindelelement 22 anzubinden, weist die Antriebseinheit 18 einen Schneckentrieb auf. Durch den Schneckentrieb sind eine Drehachse einer Motorwelle des Stellmotors und die Drehachse 28 des angetriebenen Spindelelements 22 senkrecht zueinander angeordnet. Das angetriebene Spindelelement 22, der Stellmotor und der Schneckentrieb sind innerhalb des Gehäuses 30 angeordnet. Damit umgibt das Gehäuse 30 das angetriebene Spindelelement 22, den Stellmotor und den Schneckentrieb. Das Gehäuse 30 bildet damit ein Gehäuse der Antriebseinheit 18.

Das getriebene Spindelelement 24 ist dazu vorgesehen, entlang der Drehachse 28 translatorisch bewegt zu werden. Es ist dazu vorgesehen, durch eine Drehbewegung des angetriebenen Spindelelements translatorisch bewegt zu werden. Das getriebene Spindelelement 24 ist entlang der Drehachse 28 in beide Axialrichtungen axial verschiebbar. Dabei ist eine Axialrichtung in die Zuziehrichtung 46 und die andere Axialrichtung entgegen die Zuziehrichtung 46 gerichtet. Das getriebene Spindelelement 24 ist parallel zur Kraftfahrzeugquerrichtung 56 des Kraftfahrzeugs 50 translatorisch verschiebbar.

Das angetriebene Spindelelement 22 und das getriebene Spindelelement 24 sind getrieblich miteinander verbunden. Das angetriebene Spindelelement 22 und das getriebene Spindelelement 24 weisen jeweils ein Spindelgewinde auf. Die Spindelgewinde der Spindelelemente 22, 24 sind korrespondierend zueinander ausgebildet. Die Spindelgewinde greifen ineinander, wodurch eine Drehbewegung des angetriebenen Spindelelements 22 in eine translatorische Bewegung des getriebenen Spindelelements 24 umgewandelt wird. Das Spindelgewinde des angetriebenen Spindelelements 22 ist als ein Innengewinde 48 ausgebildet. Das angetriebene Spindelelement 22 ist hohlförmig ausgebildet. Es weist auf seiner Innenfläche das Spindelgewinde auf. Das angetriebene Spindelelement 22 weist zum translatorischen Verschieben des getriebenen Spindelelements 24 das Innengewinde 48 auf. Das angetriebene Spindelelement 22 ist als eine Spindelmutter ausgebildet. Das Spindelgewinde des getriebenen Spindelelements 24 ist als ein Außengewinde 84 ausgebildet. Das getriebene Spindelelement 24 weist auf seiner Außenfläche das Spindelgewinde auf. Das getriebene Spindelelement 24 weist zum translatorischen Verschieben das Außengewinde 84 auf. Das angetriebene Spindelelement 22 nimmt das getriebene Spindelelement 24 getrieblich auf. Das getriebene Spindelelement 24 ist als eine Spindel ausgebildet.

Um das angetriebene Spindelelement 22 und das getriebene Spindelelement 24 des Spindeltriebs 20 gegen Stoßkräfte abzustützen, weist die Zuzieheinheit 10 ein mechanisches Federelement 26 auf. Das Federelement 26 stützt das angetriebene Spindelelement 22 und das getriebene Spindelelement 24 gegen Stoßkräfte ab, die auf das Schließelement 14 wirken. Die Stoßkräfte resultieren insbesondere durch ein Zuschlagen der Kraftfahrzeugtür 12. Das Federelement 26 stellt eine Federkraft bereit, die parallel zur Drehachse 28 des angetriebenen Spindelelements 22 orientiert ist. Die Federkraft weist eine Wirkrichtung auf, die parallel zur Drehachse 28 angeordnet ist. Die durch das Federelement 26 bereitgestellte Federkraft ist parallel zur Kraftfahrzeugquerrichtung 56 orientiert. Das angetriebene Spindelelement 22 ist federbelastet in dem Gehäuse 30 angeordnet.

Das Federelement 26 ist wirkungsmäßig zwischen dem angetriebenen Spindelelement 22 und dem Gehäuse 30 angeordnet. Das Federelement 26 ist wirkungsmäßig zwischen dem angetriebenen Spindelelement 22 und dem zweiten Gehäuseteil 120 angeordnet. Das Federelement 26 stützt sich mit einem Ende an dem angetriebenen Spindelelement 22 und mit einem anderen Ende an dem Gehäuse 30 ab. Es stützt sich mit einem Ende an dem angetriebenen Spindelelement 22 und mit einem anderen Ende an dem zweiten Gehäuseteil 120 ab. Das Federelement 26 drückt das angetriebene Spindelelement 22 und damit das getriebene Spindelelement 24 in Richtung Kraftfahrzeugsäule 54. Es drückt das angetriebene Spindelelement 22 und damit das getriebene Spindelelement 24 weg von dem zweiten Gehäuseteil 120 gegen das erste Gehäuseteil 118. Das Federelement 26 umgibt teilweise das angetriebene Spindelelement 22. Das Federelement 26 ist als eine Druckfeder ausgebildet. Es ist als eine Spiralfeder ausgebildet. Grundsätzlich kann das Federelement 26 auch als ein anderes Federelement ausgebildet sein, wie beispielsweise als eine Luftfeder, ein Gummielement oder dergleichen.

Um die axiale Verschiebung des getriebenen Spindelelements 24 zu begrenzen, weist die Zuzieheinheit 10 einen ersten mechanischen Anschlag 40 und einen zweiten mechanischen Anschlag 42 für das getriebene Spindelelement 24 auf. Der erste Anschlag 40 ist innerhalb des angetriebenen Spindelelements 22 angeordnet. Er ist bewegungstechnisch mit dem angetriebenen Spindelelement 22 verbunden. Der erste Anschlag 40 bewegt sich mit dem angetriebenen Spindelelement 22 mit. Der erste Anschlag 40 ist fest mit dem angetriebenen Spindelelement 22 verbunden. Er begrenzt durch einen direkten Kontakt des getriebenen Spindelelements 24 die axiale Verschiebung. Er begrenzt die axiale Verschiebung des getriebenen Spindelelements 24 in die Zuziehrichtung 46. Der erste Anschlag 40 ist hohlförmig ausgebildet. Er weist ein Außengewinde auf, mittels dem der erste Anschlag 40 an dem angetriebenen Spindelelement 22 angebunden ist. Der erste Anschlag 40 ist in das angetriebene Spindelelement 22 eingeschraubt. Der erste Anschlag 40 besteht aus Stahl. Grundsätzlich kann der erste Anschlag 40 auch aus einem anderen Material bestehen. Weiter ist es grundsätzlich denkbar, dass wenigstens eine Anschlagfläche des ersten Anschlags 40 aus einem elastischen Material besteht, wodurch eine dämpfende Wirkung beim Anschlagen realisiert werden kann. Ferner ist es grundsätzlich denkbar, dass der erste Anschlag durch ein fehlendes Innengewinde 48 oder eine Unterbrechung des Innengewindes 48 des angetriebenen Spindelelements 24 realisiert wird.

Der zweite Anschlag 42 ist außerhalb des angetriebenen Spindelelements 22 angeordnet. Er ist bewegungstechnisch mit dem getriebenen Spindelelement 24 verbunden. Der zweite Anschlag 42 bewegt sich mit dem getriebenen Spindelelement 24 mit. Der zweite Anschlag 42 begrenzt durch einen direkten Kontakt des angetriebenen Spindelelements 22 die axiale Verschiebung. Er begrenzt die axiale Verschiebung des getriebenen Spindelelements 24 entgegen die Zuziehrichtung 46. Das getriebene Spindelelement 24 ist zwischen den Anschlägen 40, 42 axial verschiebbar.

Um das getriebene Spindelelement 24 und den zweiten Anschlag 42 bewegungstechnisch miteinander zu verbinden, weist die Zuzieheinheit 10 ein Verbindungselement 86 auf, das fest mit dem getriebenen Spindelelement 24 verbunden ist. Das Verbindungselement 86 ist separat zu dem getriebenen Spindelelement 24 ausgebildet. Das Verbindungselement 86 weist im Vergleich zu dem getriebenen Spindelelement 24 einen kleineren Durchmesser auf. Das Verbindungselement 86 ragt axial aus dem angetriebenen Spindelelement 22 heraus. Es ragt zur Aufnahme des zweiten Anschlags 42 axial aus dem angetriebenen Spindelelement 22 heraus. Das Verbindungselement 86 ragt in Richtung des zweiten Gehäuseteils 120 axial aus dem angetriebenen Spindelelement 22 heraus. Das Verbindungselement 86 greift axial durch den ersten Anschlag 40 hindurch. Es greift axial beweglich durch den ersten Anschlag 40 hindurch. Das Verbindungselement 86 ist innerhalb des Federelements 26 angeordnet.

Das Verbindungselement 86 ist mit einem axialen Ende fest an das getriebene Spindelelement 24 und mit einem anderen axialen Ende fest mit dem zweiten Anschlag 42 verbunden. Um das getriebene Spindelelement 24 und das Verbindungselement 86 fest miteinander zu verbinden, weist das getriebene Spindelelement 24 eine Aufnahme 88 auf. Die Aufnahme 88 weist ein Innengewinde auf. Die Aufnahme 88 des getriebenen Spindelelements 24 ist als eine mit einem Gewinde versehene Bohrung ausgebildet. Um das Verbindungselement 86 fest in der Aufnahme 88 des getriebenen Spindelelements 24 anzuordnen, weist das Verbindungselement 86 ein Außengewinde auf, das korrespondierend zu dem Innengewinde der Aufnahme 88 ausgebildet ist. Das Verbindungselement 86 ist in die Aufnahme 88 des getriebenen Spindelelements 24 eingeschraubt. Das Verbindungselement 86 ist als eine Schraube ausgebildet.

Der zweite Anschlag 42 ist ringförmig ausgebildet. Er ist auf dem Verbindungselement 86 fest angeordnet. Der zweite Anschlag 42 besteht aus Stahl. Grundsätzlich können das getriebene Spindelelement 24 und das Verbindungselement 86 auch einstückig miteinander ausgebildet sein. Weiter ist es grundsätzlich denkbar, dass das getriebene Spindelelement 24 oder das Verbindungselement 86 ein selbstschneidendes Gewinde aufweist, wodurch ein entsprechendes Gegengewinde erst beim Einschrauben ausgebildet wird. Ferner ist es grundsätzlich denkbar, dass der zweite Anschlag 42 aus einem anderen Material besteht. Außerdem ist es grundsätzlich denkbar, dass wenigstens eine Anschlagfläche des zweiten Anschlags 42 aus einem elastischen Material besteht, wodurch eine dämpfende Wirkung beim Anschlagen realisiert werden kann.

Das getriebene Spindelelement 24 ragt lediglich mit einem axialen Ende aus dem angetriebenen Spindelelement 22 heraus. Ein anderes axiales Ende des getriebenen Spindelelements 24 ist innerhalb des angetriebenen Spindelelements 22 angeordnet. Das aus dem angetriebenen Spindelelement 22 herausragende Ende des getriebenen Spindelelements 24 ragt aus dem Gehäuse 30 heraus. Es ragt aus dem ersten Gehäuseteil 118 heraus. Das getriebene Spindelelement 24 greift axial bewegbar durch die zweite Kraftfahrzeugsäule 54 hindurch. Das aus dem angetriebenen Spindelelement 22 herausragende Ende des getriebenen Spindelelements 24 weist den Fangbereich 82 auf. Es bildet den Fangbereich 82 aus. Das innerhalb des angetriebenen Spindelelements 22 angeordnete Ende des getriebenen Spindelelements 24 weist die Aufnahme 88 auf. Das getriebene Spindelelement 24 ist mit dem innerhalb des angetriebenen Spindelelements 22 angeordneten Ende mit dem Verbindungselement 86 verbunden. Das getriebene Spindelelement 24 ist dazu vorgesehen, mit seinem innerhalb des angetriebenen Spindelelements 22 angeordneten Ende an dem ersten Anschlag 40 anzuschlagen.

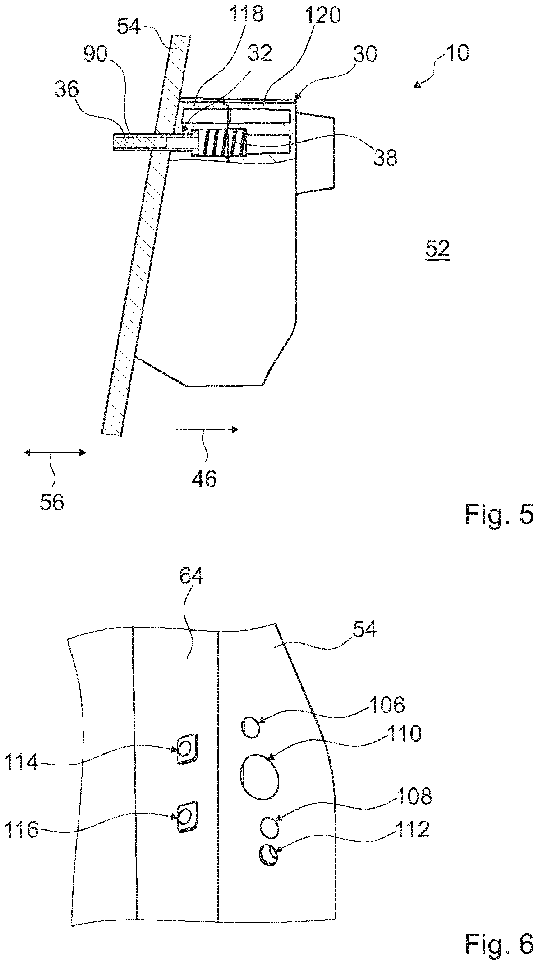

Zur Erfassung der Türposition der Kraftfahrzeugtür 12 weist die Zuzieheinheit 10 einen Türpositionssensor 32 auf, der dazu vorgesehen ist, mit einer Magneteinheit 34 der Kraftfahrzeugtür 12 wechselzuwirken. Die Magneteinheit 34 ist in die Kraftfahrzeugtür 12 integriert. Die Magneteinheit 34 ist als ein Dauermagnet ausgebildet. Der Türpositionssensor 32 ist teilweise innerhalb des Gehäuses 30 angeordnet. Der Türpositionssensor 32 ragt axial bewegbar aus dem Gehäuse 30 heraus. Er ragt aus dem ersten Gehäuseteil 118 heraus. Der Türpositionssensor 32 greift axial bewegbar durch die zweite Kraftfahrzeugsäule 54 hindurch. Der Türpositionssensor 32 ist axial beweglich in dem Gehäuse 30 aufgenommen. Er ist axial beweglich in dem Gehäuse 30 gelagert. Der Türpositionssensor 32 ist parallel zur Drehachse 28 des angetriebenen Spindelelements 22 beweglich gelagert. Der Türpositionssensor 32 ist dazu vorgesehen, in die Zuziehrichtung 46 nachzugeben. In der Figur 5 ist schematisiert ein Teilschnitt entlang einer Schnittlinie IV-IV durch den Türpositionssensor 32 dargestellt.

Der Türpositionssensor 32 weist zur Erfassung der Türposition der Kraftfahrzeugtür 12 einen Reed-Kontakt 36 auf. Zur Aufnahme des Reed-Kontakts 36 weist der Türpositionssensor 32 ein Aufnahmeelement 90 auf. Der Reed-Kontakt 36 ist fest in dem Aufnahmeelement 90 angeordnet. Das Aufnahmeelement 90 ist axial beweglich in dem Gehäuse 30 aufgenommen. Das Aufnahmeelement 90 ist zylinderförmig ausgebildet. Es ist als eine Hülse ausgebildet. Der Türpositionssensor 32 ist als ein Reedsensor ausgebildet. Er ist als ein Reedschalter ausgebildet. Das Aufnahmeelement 90 besteht zumindest teilweise aus Kunststoff.

Um den Türpositionssensor 32 gegen Stoßkräfte abzustützen, weist die Zuzieheinheit 10 ein mechanisches Federelement 38 auf. Das Federelement 38 stützt den Türpositionssensor 32 gegen Stoßkräfte ab, die auf das Aufnahmeelement 90 einwirken. Die Stoßkräfte resultieren insbesondere durch das Zuschlagen der Kraftfahrzeugtür 12. Das Federelement 38 stellt eine Federkraft bereit, die parallel zur Drehachse 28 des angetriebenen Spindelelements 22 orientiert ist. Die Federkraft weist eine Wirkrichtung auf, die parallel zur Drehachse 28 angeordnet ist. Die durch das Federelement 38 bereitgestellte Federkraft ist parallel zur Kraftfahrzeugquerrichtung 56 orientiert. Der Türpositionssensor 32 ist federbelastet in dem Gehäuse 30 aufgenommen.

Das Federelement 38 ist wirkungsmäßig zwischen dem Aufnahmeelement 90 und dem Gehäuse 30 angeordnet. Es ist wirkungsmäßig zwischen dem Aufnahmeelement 90 und dem zweiten Gehäuseteil 120 angeordnet. Das Federelement 38 stützt sich mit einem Ende an dem Aufnahmeelement 90 und mit einem anderen Ende an dem Gehäuse 30 ab. Es stützt sich mit einem Ende an dem Aufnahmeelement 90 und mit einem anderen Ende an dem zweiten Gehäuseteil 120 ab. Das Federelement 38 drückt den Türpositionssensor 32 in Richtung Kraftfahrzeugtür 12. Das Federelement 38 drückt den Türpositionssensor 32 weg von dem zweiten Gehäuseteil 120 gegen das erste Gehäuseteil 118. Bei fehlender entgegen des Federelements 38 wirkender Kraft liegt das Aufnahmeelement 90 an dem ersten Gehäuseteil 118 an, wodurch der Türpositionssensor 32 maximal aus dem Gehäuse 30 herausragt. Das Federelement 38 ist als eine Druckfeder ausgebildet. Es ist als eine Spiralfeder ausgebildet. Grundsätzlich kann das Federelement 38 auch als ein anderes Federelement ausgebildet sein, wie beispielsweise als eine Luftfeder, ein Gummielement oder dergleichen.

Um eine Belastung der zweiten Kraftfahrzeugsäule 54 durch die angebrachte Zuzieheinheit 10 gering zu halten, weist das Kraftfahrzeug 50 ein Versteifungselement 58 auf, das an der zweiten Kraftfahrzeugsäule 54 angeordnet ist. Das Versteifungselement 58 ist gegenüberliegend zur Zuzieheinheit 10 an der Kraftfahrzeugsäule 54 angeordnet. Es ist an einer dem Kraftfahrzeuginnenraum 52 abgewandten Seite angebracht. Das Versteifungselement 58 und die Zuzieheinheit 10 sind an zwei einander abgewandten Seiten der zweiten Kraftfahrzeugsäule 54 angebracht.

Das Eingriffselement 128 ist fest an dem Versteifungselement 58 angeordnet. Es ist fest mit dem Versteifungselement 58 verbunden. Das Versteifungselement 58 verbindet das Eingriffselement 128 mit der Karosserie. Somit verbindet das Versteifungselement 58 drehfest das Schließelement 14 mit der Karosserie. Weist das Kraftfahrzeug eine Ausnehmung und das Schließelement 14 ein Eingriffselement, das zur Verdrehsicherung in die Ausnehmung des Kraftfahrzeugs 50 eingreift, auf, so weist das Versteifungselement 58 die Ausnehmung auf.

Das beweglich angeordnete Schließelement 14 und damit das getriebene Spindelelement 24 greifen axial beweglich durch das Versteifungselement 58 hindurch. Der Türpositionssensor 32 greift axial beweglich durch das Versteifungselement 58 hindurch. Das Versteifungselement 58 ist an der Seitenwand 64 befestigt. Es weist eine Anlagefläche für die zweite Kraftfahrzeugsäule 54 und eine Anlagefläche für die Seitenwand 64 auf. Die Anlageflächen des Versteifungselements 58 sind winklig zueinander angeordnet. Das Versteifungselement 58 ist als ein Versteifungswinkel ausgebildet.

Das Versteifungselement 58 weist erste Befestigungsstellen 92, 94 zur Befestigung an die Seitenwand 64 und zweite Befestigungsstellen 96, 98 zur Befestigung der Zuzieheinheit 10 an der zweiten Kraftfahrzeugsäule 54 auf. Die ersten Befestigungsstellen 92, 94 sind an der Anlagefläche für die Seitenwand 64 und die zweiten Befestigungsstellen 96, 98 sind an der Anlagefläche für die zweite Kraftfahrzeugsäule 54 angeordnet. Die Befestigungsstellen 92, 94, 96, 98 sind als Bohrungen ausgebildet. Das Versteifungselement 58 ist mit der Seitenwand 64 verschraubt.

Zur Befestigung an der zweiten Kraftfahrzeugsäule 54 weist die Zuzieheinheit 10 Befestigungsmittelaufnahmen 100, 102 auf, die mit den zweiten Befestigungsstellen 96, 98 des Versteifungselements 58 korrespondieren. Die Befestigungsmittelaufnahmen 100, 102 sind durch das Gehäuse 30 gebildet. Sie sind durch das erste Gehäuseteil 118 gebildet. Dabei weist das Kraftfahrzeug 50 zur Befestigung der Zuzieheinheit 10 Befestigungsmittel 104 auf, wobei jeweils ein Befestigungsmittel 104 in jeweils einer zweiten Befestigungsstelle 96, 98 angeordnet ist. Die Befestigungsmittel 104 greifen durch die zweite Kraftfahrzeugsäule 54 jeweils in eine Befestigungsmittelaufnahme 100, 102 der Zuzieheinheit 10 ein. Dabei ziehen die Befestigungsmittel 104 die Zuzieheinheit 10 gegen die zweite Kraftfahrzeugsäule 54. Die Befestigungsmittel 104 sind als Schrauben ausgebildet.

Um eine besonders langlebige Zuzieheinheit 10 bereitzustellen, weist das Kraftfahrzeug 50 eine erste Dichtung 130, eine zweite Dichtung 132 und eine dritte Dichtung 134 auf. Die erste Dichtung 130 ist zwischen dem Versteifungselement 58 und der zweiten Kraftfahrzeugsäule 54 angeordnet. Die zweite Dichtung 132 ist auf dem getriebenen Spindelelement 24 angeordnet. Sie umgibt das getriebene Spindelelement 24. Die zweite Dichtung 132 weist an ihrem Innenumfang eine Erhebung auf, die in die Ausnehmung 122 des getriebenen Spindelelements 24 eingreift. Die dritte Dichtung 134 ist auf dem Aufnahmeelement 90 des Türpositionssensors 32 angeordnet. Sie umgibt das Aufnahmeelement 90. Grundsätzlich kann das Kraftfahrzeug 50 Dichtungen aufweisen, die jeweils auf einem Befestigungsmittel 104 angeordnet sind.

Zur Steuerung und/oder Regelung weist die Zuzieheinheit 10 eine Steuer- und Regeleinheit 44 auf, die steuerungstechnisch mit dem Stellmotor der Antriebseinheit 18 verbunden ist. Um den Stellmotor der Antriebseinheit 18 und damit die axiale Verschiebung des getriebenen Spindelelements 24 in Abhängigkeit der Türposition der Kraftfahrzeugtür 12 zu steuern und/oder zu regeln, ist die Steuer- und Regeleinheit 44 kommunizierend mit dem Türpositionssensor 32 verbunden. Die Steuer- und Regeleinheit 44 ist innerhalb des Gehäuses 30 angeordnet. Zum Aktivieren des Stellmotors bestromt die Steuer- und Regeleinheit 44 den Stellmotor. Durch das Aktivieren des Stellmotors dreht der Stellmotor das angetriebene Spindelelement 22 in eine einer Stromrichtung entsprechende Drehrichtung, wodurch das angetriebene Spindelelement 22 das getriebene Spindelelement 24 entsprechend axial in das Gehäuse 30 oder axial aus dem Gehäuse 30 bewegt. Bestromt die Steuer- und Regeleinheit 44 den Stellmotor in eine der Zuziehrichtung 46 gerichtete Bestromungsrichtung verschiebt sich das getriebene Spindelelement 24 axial in die Zuziehrichtung 46. Bestromt die Steuer- und Regeleinheit 44 den Stellmotor in eine der Zuziehrichtung 46 entgegen gerichtete Bestromungsrichtung verschiebt sich das getriebene Spindelelement 24 axial entgegen die Zuziehrichtung 46.

Die Zuzieheinheit 10 ist dazu vorgesehen, die Kraftfahrzeugtür 12 ausgehend von einer durch die Hauptraststellung der ersten Schlosseinheit 16 definierten Türposition motorisch zu zuziehen. Die Zuzieheinheit 10 zieht die Kraftfahrzeugtür 12 zu, wenn die Steuer- und Regeleinheit 44 mittels des Türpositionssensors 32 die Hauptraststellung der ersten Schlosseinheit 16 erkennt. Zum motorischen Zuziehen der Kraftfahrzeugtür 12 aktiviert die Steuer- und Regeleinheit 44 den Stellmotor der Antriebseinheit 18, in dem die Steuer- und Regeleinheit 44 den Stellmotor in die der Zuziehrichtung 46 gerichtete Stromrichtung bestromt. Dadurch bewegt sich das Schließelement 14 in die Zuziehrichtung 46 und zieht die Kraftfahrzeugtür 12 gegen die Türdichtung. Die die Zuzieheinheit 10 auslösende Türposition ist als eine Türposition ausgebildet, in der sich die erste Schlosseinheit 16 in der Hauptraststellung befindet.

Die Zuzieheinheit 10 ist dazu vorgesehen, die Kraftfahrzeugtür 12 ausgehend von der durch die Hauptraststellung definierte Türposition zu überziehen. Durch das Überziehen stellt die Zuzieheinheit 10 zuverlässig die Hauptraststellung der zweiten Schlosseinheit 80 ein. Zum Überziehen der Kraftfahrzeugtür 12 weist die Steuer- und Regeleinheit 44 eine Überziehfunktion auf, die dazu vorgesehen ist, die Kraftfahrzeugtür 12 über die durch die Hauptraststellung der ersten Schlosseinheit 16 definierte Türposition hinaus motorisch zu bewegen. Die Überziehfunktion steuert den Stellmotor der Antriebseinheit 18 an bis das getriebene Spindelelement 24 mit seinem innerhalb des angetriebenen Spindelelements 22 angeordneten Ende an dem ersten Anschlag 40 anliegt. Der erste Anschlag 40 definiert eine überzogene Türposition der Kraftfahrzeugtür 12. In der überzogenen Türposition befindet sich die erste Schlosseinheit 16 weiterhin in der Hauptraststellung. Die Zuzieheinheit 10 zieht die Kraftfahrzeugtür 12 ausgehend von der durch die Hauptraststellung definierten Türposition selbstständig und automatisch in die überzogene Türposition. Durch das Überziehen der Kraftfahrzeugtür 12 wird die Hauptraststellung der zweiten Schlosseinheit 80 eingestellt.

Um eine Position des getriebenen Spindelelements 24 und damit die Türposition der Kraftfahrzeugtür 12 beim motorischen Bewegen zu erfassen, detektiert die Steuer- und Regeleinheit 44 eine Leistungsaufnahme des Stellmotors. Die Steuer- und Regeleinheit 44 ordnet einem Anschlagen des getriebenen Spindelelements 24 an dem zweiten Anschlag 42 dem beweglich angeordneten Schließelement 14 eine Abholposition zu, in der das Schließelement 14 maximal aus dem Gehäuse 30 heraus gefahren ist. Einem Anschlagen des getriebenen Spindelelements 24 an dem ersten Anschlag 40 ordnet die Steuer- und Regeleinheit 44 dem beweglich angeordneten Schließelement 14 eine überzogene Position und der Kraftfahrzeugtür 12 damit die überzogene Türposition zu. Einen Anschlag an dem entsprechenden Anschlag 40, 42 erkennt die Steuer- und Regeleinheit 44 an einem Anstieg der Leistungsaufnahme bei entsprechender Bestromungsrichtung des Stellmotors.

Durch das Anschlagen des getriebenen Spindelelements 24 an dem ersten Anschlag 40 liegt das getriebene Spindelelement 24 formschlüssig an dem ersten Anschlag 40 an, wodurch die Leistungsaufnahme des Stellmotors der Antriebseinheit 18 ansteigt. Die Steuer- und Regeleinheit 44 erkennt den Anstieg der Leistungsaufnahme des Stellmotors und dadurch das Anschlagen des getriebenen Spindelelements 24 an dem ersten Anschlag 40. Die Steuer- und Regeleinheit 44 ordnet dem Anstieg der Leistungsaufnahme eine erfolgreiche Einstellung der überzogenen Türposition zu. Nach erfolgreicher Einstellung der überzogenen Türposition ändert die Steuer- und Regeleinheit 44 die Bestromungsrichtung des Stellmotors.

Nach erfolgreicher Einstellung der überzogenen Türposition bestromt die Steuer- und Regeleinheit 44 den Stellmotor zeitweise in die entgegen der Zuziehrichtung 46 gerichtete Bestromungsrichtung, wodurch das getriebene Spindelelement 24 entgegen die Zuziehrichtung 46 motorisch bewegt wird. Dadurch bewegt sich das getriebene Spindelelement 24 axial aus dem Gehäuse 30, wodurch die Kraftfahrzeugtür 12 die überzogene Türposition verlässt. Dabei ist in der Steuer- und Regeleinheit 44 eine Zeitdauer hinterlegt, während der die Steuer- und Regeleinheit 44 den Stellmotor ausgehend von der erfolgreich eingestellten überzogenen Türposition mit der entgegen der Zuziehrichtung 46 gerichteten Bestromungsrichtung bestromt. Während der hinterlegten Zeitdauer steuert die Steuer- und Regeleinheit 44 den Stellmotor nach erfolgreicher Einstellung der überzogenen Türposition entgegen der Zuziehrichtung 46 an und stellt dadurch ausgehend von der überzogenen Türposition die durch die Hauptraststellung definierte Türposition ein. Die Zeitdauer kann dabei verändert werden, wodurch die Zeitdauer an verschiedene Kraftfahrzeuge angepasst werden kann. Grundsätzlich kann durch eine entsprechende Wahl der hinterlegten Zeitdauer auch eine andere Türposition eingestellt werden, beispielsweise eine Türposition, die entlang der Zuziehrichtung 46 betrachtet vor der überzogenen Türposition angeordnet ist. Ferner ist es grundsätzlich denkbar, dass eine durch die Vorraststellung definierte Türposition oder eine andere Türposition, als die die Zuzieheinheit 10 auslösende Türposition, ausgebildet ist.

Die Zuzieheinheit 10 wird zur Nachrüstung des Kraftfahrzeugs 50 zum Wohnwagen verwendet. Dazu wird ein Serienkraftfahrzeug mit der Zuzieheinheit 10 nachgerüstet. Dabei ersetzt die Zuzieheinheit 10 ein starr mit der Karosserie des Serienkraftfahrzeugs verbundenes Serienschließelement. Dazu wird das an der zweiten Kraftfahrzeugsäule 54 angeordnete Serienschließelement ausgebaut und an deren Stelle die Zuzieheinheit 10 an die Kraftfahrzeugsäule 54 angeordnet.

Um die Zuzieheinheit 10 an die zweite Kraftfahrzeugsäule 54 anzubringen, wird die zweite Kraftfahrzeugsäule 54 nachbearbeitet. Dabei werden Durchgangsöffnungen 106, 108 für die Befestigung der Zuzieheinheit 10, eine Durchgangsöffnung 110 für das beweglich angeordnete Schließelement 14 und eine Durchgangsöffnung 112 für den Türpositionssensor 32 in die zweite Kraftfahrzeugsäule 54 eingebracht (vgl. Fig. 6). Die Durchgangsöffnungen 106, 108 sind zur Durchführung der Befestigungsmittel 104, die Durchgangsöffnung 110 zur Durchführung des beweglich angeordneten Schließelements 14 und die Durchgangsöffnung 112 zur Durchführung des Türpositionssensor 32 vorgesehen. Die Durchgangsöffnungen 106, 108 korrespondieren mit den zweiten Befestigungsstellen 96, 98 des Versteifungselements 58 und den Befestigungsmittelaufnahmen 100, 102 der Zuzieheinheit 10. Die Durchgangsöffnungen 106, 108, 110, 112 werden in die zweite Kraftfahrzeugsäule 54 gebohrt.

Zur Befestigung des Versteifungselements 58 an der Seitenwand 64 werden bereits vorhandene Befestigungsstellen 114, 116, an denen das starr verbundene Serienschließelement vor dem Nachrüsten befestigt war, genutzt. Zur Befestigung des Versteifungselements 58 werden serienmäßig vorhandene Befestigungsstellen 114, 116 genutzt. Die bereits vorhandenen Befestigungsstellen 114, 116 korrespondieren mit den ersten Befestigungsstellen 92, 94 des Versteifungselements 58.

Nach dem Einbringen der Durchgangsöffnungen 106, 108, 110, 112 in die zweite Kraftfahrzeugsäule 54 wird das Versteifungselement 58 an den bereits vorhandenen Befestigungsstellen 114, 116 an die Seitenwand 64 geschraubt. Anschließend wird die Zuzieheinheit 10 an die zweite Kraftfahrzeugsäule 54 angebracht, wobei die Dichtungen 130, 132, 134 angebracht und das beweglich angeordnete Schließelement 14 sowie der Türpositionssensor 32 durch die entsprechende Durchgangsöffnung 110, 112 geführt werden. Daraufhin werden die Befestigungsmittel 104 durch das Versteifungselement 58 in die Befestigungsmittelaufnahmen 100, 102 der Zuzieheinheit 10 eingeschraubt, wodurch die Zuzieheinheit 10 gegen die dem Kraftfahrzeuginnenraum 52 zugewandte Seite der zweiten Kraftfahrzeugsäule 54 gezogen wird. Dabei stützt das Versteifungselement 58 zumindest zum Teil die Zuzieheinheit 10 ab. Die Zuzieheinheit 10 ist durch das Versteifungselement 58 auch an der Seitenwand 64 befestigt, wodurch die Seitenwand 64 zumindest teilweise zur Abstützung der Zuzieheinheit 10 beiträgt, wodurch die zweite Kraftfahrzeugsäule 54 entlastet wird. Das Versteifungselement 58 wird ferner zur Positionierung der Zuzieheinheit 10 und zum Toleranzausgleich genutzt.

## Patentansprüche

1. Zuzieheinheit für eine Kraftfahrzeugtür (12), insbesondere eine Kraftfahrzeugschiebetür, mit zumindest einem translatorisch beweglich angeordneten Schließelement (14), das dazu vorgesehen ist, mit einer Schlosseinheit (16) der Kraftfahrzeugtür (12) zusammenzuwirken, und mit einer Antriebseinheit (18), die dazu vorgesehen ist, zum motorischen Zuziehen der Kraftfahrzeugtür (12) das zumindest eine Schließelement (14) translatorisch zu bewegen, und die einen Spindeltrieb (20) mit zumindest einem angetriebenen Spindelelement (22) und zumindest einem getriebenen Spindelelement (24), das bewegungstechnisch mit dem Schließelement (14) verbunden ist, aufweist,
**dadurch gekennzeichnet, dass**
das angetriebene Spindelelement (22) axial beweglich angeordnet ist.

2. Zuzieheinheit nach Anspruch 1,
**gekennzeichnet durch**
zumindest ein Federelement (26), das dazu vorgesehen ist, zumindest einen Teil des Spindeltriebs (20) gegen Stoßkräfte abzustützen.

3. Zuzieheinheit nach Anspruch 1 oder 2,
**gekennzeichnet durch**
zumindest ein Federelement (26), das eine Federkraft bereitstellt, die zumindest im Wesentlichen parallel zu einer Drehachse (28) des angetriebenen Spindelelements (22) orientiert ist.

4. Zuzieheinheit nach einem der vorhergehenden Ansprüche,
**gekennzeichnet durch**
ein Gehäuse (30) und zumindest ein Federelement (26), das wirkungsmäßig zwischen dem angetriebenen Spindelelement (22) und dem Gehäuse (30) angeordnet ist.

5. Zuzieheinheit nach einem der vorhergehenden Ansprüche,
**gekennzeichnet durch**
zumindest einen Türpositionssensor (32), der dazu vorgesehen ist, zur Erfassung zumindest einer Türposition der Kraftfahrzeugtür (12) mit einer Magneteinheit (34) der Kraftfahrzeugtür (12) wechselzuwirken.

6. Zuzieheinheit nach einem der vorhergehenden Ansprüche,
**gekennzeichnet durch**
zumindest einen Türpositionssensor (32), der zur Erfassung zumindest einer Türposition der Kraftfahrzeugtür (12) zumindest einen Reed-Kontakt (36) aufweist.

7. Zuzieheinheit nach einem der vorhergehenden Ansprüche,
**gekennzeichnet durch**
zumindest ein Federelement (38), das dazu vorgesehen ist, zumindest einen Teil des Türpositionssensors (32) gegen Stoßkräfte abzustützen.

8. Zuzieheinheit nach einem der vorhergehenden Ansprüche,
**gekennzeichnet durch**
zumindest einen mechanischen Anschlag (40) für das getriebene Spindelelement (24), der innerhalb des angetriebenen Spindelelements (22) angeordnet ist, wobei der Anschlag (40) bewegungstechnisch mit dem angetriebenen Spindelelement (22) verbunden ist.

9. Zuzieheinheit nach einem der vorhergehenden Ansprüche,
**gekennzeichnet durch**
zumindest einen mechanischen Anschlag (42) für das getriebene Spindelelement (24), der außerhalb des angetriebenen Spindelelements (22) angeordnet ist, wobei der Anschlag (42) bewegungstechnisch mit dem getriebenen Spindelelement (24) verbunden ist.

10. Zuzieheinheit nach einem der vorhergehenden Ansprüche,
**gekennzeichnet durch**
eine Steuer- und/oder Regeleinheit (44), die dazu vorgesehen ist, zum motorischen Zuziehen der Kraftfahrzeugtür (12) die Antriebseinheit (18) in einer durch eine Hauptraststellung der Schlosseinheit (16) definierten Türposition der Kraftfahrzeugtür (12) zu aktivieren.

11. Zuzieheinheit nach einem der vorhergehenden Ansprüche,
**gekennzeichnet durch**
eine Steuer- und/oder Regeleinheit (44), die eine Überziehfunktion aufweist, die dazu vorgesehen ist, die Kraftfahrzeugtür (12) über eine durch die Hauptraststellung definierte Türposition hinaus motorisch zu bewegen.

12. Zuzieheinheit nach einem der vorhergehenden Ansprüche,
**dadurch gekennzeichnet, dass**
das getriebene Spindelelement (24) dazu vorgesehen ist, drehfest mit einem Gehäuse (30) der Zuzieheinheit (10) verbunden zu werden, und/oder das Schließelement (14) dazu vorgesehen ist, drehfest mit einer Karosserie des Kraftfahrzeugs (50) verbunden zu werden.

13. Zuzieheinheit nach einem der vorhergehenden Ansprüche,
**dadurch gekennzeichnet, dass**
das angetriebene Spindelelement (22) zum translatorischen Verschieben des getriebenen Spindelelements (24) ein Innengewinde (48) aufweist.

14. Kraftfahrzeug, insbesondere Kastenwagen, mit zumindest einer Kraftfahrzeugtür (12), die dazu vorgesehen ist, wahlweise einen Kraftfahrzeuginnenraum (52) zu verschließen oder zu öffnen, mit zumindest einer Kraftfahrzeugsäule (54), die dazu vorgesehen ist, von der Kraftfahrzeugtür (12) in zumindest einer Türposition verdeckt zu werden, mit einer zum Verriegeln der Kraftfahrzeugtür (12) vorgesehenen Schlosseinheit (16), die in die Kraftfahrzeugtür (12) integriert ist, und mit einer an der Kraftfahrzeugsäule (54) befestigen Zuzieheinheit (10) nach einem der vorhergehenden Ansprüche, die ein zumindest im Wesentlichen außerhalb der Kraftfahrzeugsäule (54) angeordnetes Gehäuse (30) aufweist.

15. Kraftfahrzeug nach Anspruch 14,
**dadurch gekennzeichnet, dass**
das Gehäuse (30) der Zuzieheinheit (10) in den Kraftfahrzeuginnenraum (52) hineinragt.

16. Kraftfahrzeug nach Anspruch 14 oder 15,
**dadurch gekennzeichnet, dass**
die Zuzieheinheit (10) zumindest ein zum motorischen Zuziehen der Kraftfahrzeugtür (12) vorgesehenes Schließelement (14) aufweist, das zumindest im Wesentlichen parallel zu einer Kraftfahrzeugquerrichtung (56) translatorisch beweglich angeordnet ist.

17. Kraftfahrzeug nach einem der Ansprüche 14 bis 16,
**gekennzeichnet durch**
zumindest ein Versteifungselement (58), das gegenüberliegend zur Zuzieheinheit (10) an der Kraftfahrzeugsäule (54) angeordnet ist.

18. Verwendung einer Zuzieheinheit (10) nach einem der Ansprüche 1 bis 13, zur Nachrüstung eines Kraftfahrzeugs (50), insbesondere eines Kastenwagens.

19. Verwendung nach Anspruch 18,
**dadurch gekennzeichnet, dass**
die Zuzieheinheit (10) ein Serienschließelement des Kraftfahrzeugs (50) ersetzt.

## Claims

1. Pull-closed unit for a motor vehicle door (12), in particular a motor vehicle sliding door, with at least one translationally movable closure element (14), which is configured to act together with a lock unit (16) of the motor vehicle door (12), and with a drive unit (18), which is configured to translationally move the at least one closure element (14) for a motor-driven pulling of the motor vehicle door (12) closed and which comprises a spindle drive (20) with at least one driven spindle element (22) and at least one propelled spindle element (24) which is connected to the closure element (14) in terms of motion,
**characterised in that**
the driven spindle element (22) is arranged in such a way that it is axially mobile.

2. Pull-closed unit according to claim 1,
**characterised by**
at least one spring element (26) configured to support at least part of the spindle drive (20) against impact forces.

3. Pull-closed unit according to claim 1 or 2,
**characterised by**
at least one spring element (26) providing a spring force which is oriented at least substantially in parallel to a rotational axis (28) of the driven spindle element (22).

4. Pull-closed unit according to one of the preceding claims,
**characterised by**
a housing (30) and at least one spring element (26), which is operatively arranged between the driven spindle element (229 and the housing (30).

5. Pull-closed unit according to one of the preceding claims,
**characterised by**
at least one door position sensor (32) configured to interact with a magnet unit (34) of the motor vehicle door (12) for capturing at least one door position of the motor vehicle door (12).

6. Pull-closed unit according to one of the preceding claims,
**characterised by**
at least one door position sensor (32) comprising at least one Reed contact (36) for capturing at least one door position of the motor vehicle door (12).

7. Pull-closed unit according to one of the preceding claims,
**characterised by**
at least one spring element (38) configured to support at least part of the door position sensor (32) against impact forces.

8. Pull-closed unit according to one of the preceding claims,
**characterised by**
at least one mechanical stop (40) for the propelled spindle element (24), wherein the stop (40) is arranged inside the driven spindle element (22) and is connected to the driven spindle element (22) in terms of motion.

9. Pull-closed unit according to one of the preceding claims,
**characterised by**
at least one mechanical stop (42) for the propelled spindle element (24), which is arranged outside the driven spindle element (22), wherein the stop (42) is connected to the propelled spindle element (24) in terms of motion.

10. Pull-closed unit according to one of the preceding claims,
**characterised by**
a control and/or regulation unit (44), which is configured to activate the drive unit (18) in a door position of the motor vehicle door (12) defined by a main latch position of the lock unit (16) for the purpose of a motor-driven pulling of the motor vehicle door (12) closed.

11. Pull-closed unit according to one of the preceding claims,
**characterised by**
a control and/or regulation unit (44) comprising an overrun function which is configured to motorically move the motor vehicle door (12) beyond a door position defined by the main latch position.

12. Pull-closed unit according to one of the preceding claims,
**characterised in that**
the propelled spindle element (24) is configured to be connected to a housing (30) of the pull-closed unit (10) in a torque-proof fashion, and/or that the closure element (14) is configured to be connected to a car body of the motor vehicle (50) in a torque-proof fashion.

13. Pull-closed unit according to one of the preceding claims,
**characterised in that,**
for a translational displacement of the propelled spindle element (24), the driven spindle element (22) features an inner thread (48).

14. Motor vehicle, in particular panel van, with at least one motor vehicle door (12), which is configured to optionally close or open a motor vehicle interior space (52), with at least one motor vehicle column (54), which is configured to be screened off by the motor vehicle door (12) in at least one door position, with a lock unit (16), which is configured for locking the motor vehicle door (12) and is integrated in the motor vehicle door (12), and with a pull-closed unit (10) according to one of the preceding claims, which is fixated to the motor vehicle column (54) and comprises a housing (30) arranged at least substantially outside the motor vehicle column (54).

15. Motor vehicle according to claim 14,
**characterised in that**
the housing (30) of the pull-closed unit (10) extends into the motor vehicle interior space (52).

16. Motor vehicle according to claim 14 or 15,
**characterised in that**
the pull-closed unit (10) comprises at least one closure element (14) which is configured for a motor-driven pulling of the motor vehicle door (12) closed and which is arranged translationally movably at least substantially in parallel to a motor vehicle transverse direction (56).

17. Motor vehicle according to one of claims 14 to 16,
**characterised by**
at least one stiffening element (58) arranged at the motor vehicle column (54) opposite the pull-closed unit (10).

18. Utilisation of a pull-closed unit (10)
according to one of claims 1 to 13, for retrofitting of a motor vehicle (50), in particular a panel van.

19. Utilisation according to claim 18,
**characterised in that**
the pull-closed unit (10) substitutes a serial-locking element of the motor vehicle (50).

## Revendications

1. Unité de fermeture pour une porte de véhicule automobile (12), notamment une porte coulissante de véhicule automobile, avec au moins un élément de fermeture (14), lequel est disposé de façon translationnellement mouvable et est prévu à agir en coopération avec une unité de serrure (16) de la porte de véhicule automobile (12), et avec une unité d'entraînement (18), laquelle est prévue à mouvoir l'au moins un élément de fermeture (14) translationnellement pour le but de fermeture motrice de la porte de véhicule automobile (12), et laquelle comporte un mécanisme à broche (20) avec au moins un élément à broche entraîné (22) et au moins un élément à broche avancé (24), lequel est raccordé à l'élément de fermeture (14) en termes de mouvement,
**caractérisé en ce que**
l'élément à broche entraîné (22) est disposé de façon axialement mouvable.

2. Unité de fermeture selon la revendication 1,
**caractérisé par**
au moins un élément de ressort (26) prévu à soutenir au moins part du mécanisme à broche (20) contre des forces d'impact.

3. Unité de fermeture selon la revendication 1 ou 2,
**caractérisé par**
au moins un élément de ressort (26) fournissant une force de ressort, laquelle est orientée au moins sensiblement en parallèle à un axe rotatif (28) de l'élément à broche entraîné (22).

4. Unité de fermeture selon l'une quelconque des revendications précédentes,
**caractérisé par**
un boîtier (30) et au moins un élément de ressort (26), lequel est disposé fonctionnellement entre l'élément à broche entraîné (22) et le boîtier (30).

5. Unité de fermeture selon l'une quelconque des revendications précédentes,
**caractérisé par**
au moins un capteur à position porte (32) configuré pour interagir avec une unité d'aimant (34) de la porte de véhicule automobile (12) pour capturer au moins une position porte de la porte de véhicule automobile (12).

6. Unité de fermeture selon l'une quelconque des revendications précédentes,
**caractérisé par**
au moins un capteur à position porte (32) comportant au moins un contact reed (36) pour capturer au moins une position porte de la porte de véhicule automobile (12).

7. Unité de fermeture selon l'une quelconque des revendications précédentes,
**caractérisé par**
au moins un élément de ressort (38) prévu à soutenir au moins part du capteur à position porte (32) contre des forces d'impact.

8. Unité de fermeture selon l'une quelconque des revendications précédentes, **caractérisé par**
au moins une butée mécanique (40) pour l'élément à broche avancé (24), laquelle est disposée à l'intérieur de l'élément entraîné (22), et est raccordée à l'élément entraîné (22) en termes de mouvement.

9. Unité de fermeture selon l'une quelconque des revendications précédentes,
**caractérisé par**
au moins une butée mécanique (42) pour l'élément à broche avancé (24), laquelle est disposée à l'extérieur de l'élément entraîné (22), et est raccordée à l'élément avancé (24) en termes de mouvement.

10. Unité de fermeture selon l'une quelconque des revendications précédentes,
**caractérisé par**
une unité de commande et/ou régulation (44) prévue à activer l'unité d'entraînement (18) dans une position porte de la porte de véhicule automobile (12) définie par le biais d'une position d'encliquetage principale de l'unité de serrure (16) pour le but d'une fermeture motrice de la porte de véhicule automobile (12).

11. Unité de fermeture selon l'une quelconque des revendications précédentes,
**caractérisé par**
une unité de commande et/ou régulation (44) comportant une fonction de dépassement prévue à mouvoir la porte de véhicule automobile (12) au-delà d'une position porte définie par le biais de la position d'encliquetage principale.

12. Unité de fermeture selon l'une quelconque des revendications précédentes,
**caractérisé en ce que**
l'élément à broche avancé (24) est configuré pour être raccordé, de manière solidaire en rotation, à un boîtier (30) de l'unité de fermeture (10), et/ou que l'élément de fermeture (14) est configuré pour être raccordé, de manière solidaire en rotation, à une carrosserie du véhicule automobile (50).

13. Unité de fermeture selon l'une quelconque des revendications précédentes,
**caractérisé en ce que**
l'élément à broche entraîné (22) comporte un filetage femelle (48) pour un déplacement translationnel de l'élément avancé (24).

14. Véhicule automobile, notamment camionnette, avec au moins une porte de véhicule automobile (12), laquelle est configurée pour optionnellement fermer ou ouvrir un espace intérieur de véhicule automobile (52), avec au moins une colonne de véhicule automobile (54) prévue à être cachée par la porte de véhicule automobile (12) dans au moins une position porte, avec une unité de serrure (16) prévue à verrouiller la porte de véhicule automobile (12) et intégrée dans la porte de véhicule automobile (12), et avec une unité de fermeture (10) selon l'une quelconque des revendications précédentes, laquelle est fixée à la colonne de véhicule automobile (54) et comporte un boîtier (30) disposé au moins sensiblement à l'extérieur de la colonne de véhicule automobile (54).

15. Véhicule automobile selon la revendication 14,
**caractérisé en ce que**
le boîtier (30) de l'unité de fermeture (10) s'étend dans l'espace intérieur de véhicule automobile (52).

16. Véhicule automobile selon la revendication 14 ou 15,
**caractérisé en ce que**
l'unité de fermeture (10) comporte au moins un élément de fermeture (14), lequel est prévu à la fermeture motrice de la porte de véhicule automobile (12) et est disposé au moins sensiblement en parallèle à une direction transversale du véhicule automobile (56) de façon translationnellement mouvable.

17. Véhicule automobile selon l'une quelconque des revendications 14 à 16,
**caractérisé par**
au moins un élément raidisseur (58) disposé à la colonne de véhicule automobile (54) en face de l'unité de fermeture (10).

18. Usage d'une unité de fermeture (10) selon l'une quelconque des revendications 1 à 13, pour l'equipement postérieur d'un véhicule automobile (50), notamment une camionnette.

19. Usage selon la revendication 18,
**caractérisé en ce que**
l'unité de fermeture (10) remplace un élément de fermeture de série du véhicule automobile (50).
